Europäisches Patentamt

European Patent Office

Office européen des brevets

(19)

(11) **EP 0 601 566 B1**

(12) **EUROPEAN PATENT SPECIFICATION**

(45) Date of publication and mention
of the grant of the patent:
**23.09.1998 Bulletin 1998/39**

(51) Int Cl.⁶: **G11B 20/00, G11B 20/10**

(21) Application number: **93119805.5**

(22) Date of filing: **08.12.1993**

(54) **Digital signal processing apparatus and method**

Gerät und Verfahren zur Digitalsignalverarbeitung

Appareil et procédé de traitement de signaux numériques

(84) Designated Contracting States:
**DE FR GB**

(30) Priority: **11.12.1992 JP 331792/92**

(43) Date of publication of application:
**15.06.1994 Bulletin 1994/24**

(73) Proprietor: **SONY CORPORATION**
**Tokyo 141 (JP)**

(72) Inventor: **Akagiri, Kenzo, c/o Sony Corporation**
**Shinagawa-ku, Tokyo (JP)**

(74) Representative: **Melzer, Wolfgang, Dipl.-Ing. et al**
**Patentanwälte**
**Mitscherlich & Partner,**
**Sonnenstrasse 33**
**80331 München (DE)**

(56) References cited:
**EP-A- 0 338 781          EP-A- 0 348 132**
**EP-A- 0 516 342**

EP 0 601 566 B1

**Description**

BACKGROUND OF THE INVENTION

1. Field of the Invention

This invention relates to a digital signal processing apparatus and method thereof for recording and/or reproducing, or transmitting and/or receiving, compressed data, that is, bit-compressed digital audio signals, and to a recording medium therefor. More particularly, it relates to a compressed data recording and/or reproducing apparatus and a method thereof for recording compressed data in a compressed mode of plural bit rates, and a recording medium therefor.

2. Description of the Related Art

The present Assignee has proposed in e.g. US Patent Nos. 5,243,588 and 5,244,705, and EP-A-0 469 874 1991 (now pending), a technique of bit-compressing input digital audio signals and recording the bit-compressed signals in a burst-like manner with a predetermined data volume as a recording unit.

With this technique, a magneto-optical disc is used as a recording medium for recording/reproducing adaptive differential (AD) PCM audio data, as prescribed in a so-called CD-I (CD-Interactive) or CD-ROM XA audio data format. These ADPCM data are recorded in a burst-like manner on the magneto-optical disc, with e.g. 32 sectors of the ADPCM data and several linking sectors as a recording unit, the linking sectors being used for interleaving.

Several modes may be selected for ADPCM audio data in the recording/reproducing apparatus employing the magneto-optical disc. For example, levels A, B and C are prescribed, with level A having the compression rate twice that of the usual CD playback time and the sampling frequency of 37.8 kHz, level B having the compression rate four times and the sampling frequency of 37.8 kHz, and level C having the compression rate eight times and the sampling frequency of 18.9 kHz. For level B, for example, digital audio data are compressed to about one-fourth so that the playback time of the disc recorded in this level B mode is four times that of the standard CD format (CD-DA format). This leads to accomplishment of a small-sized apparatus because the recording/playback time comparable to that in a standard 12 cm disc may be realized with a disc of a smaller size.

However, since the rotational velocity of the disc is the same as that of a standard CD, the volume of compressed data per unit time is four times the data volume corresponding to the playback time for the level B. For this reason, the same compressed data are read four times per unit time of a sector or a cluster and only compressed data corresponding to one reading is sent to an audio playback system. Specifically, when scanning or tracking a spirally extending recording track, track jump is carried out in the course of reproduction so that the optical head is returned to the original track position after each complete rotation, thereby implementing reproducing operation in such a manner that tracking of the same track is repeated four times. This operating mode is desirable when used in, above all, a small-sized portable system, because it suffices to produce accurate compressed data in at least one of the four repeated readout operations, so that the operation is strong against errors due to external disturbances or the like.

In the future, semiconductor memories are expected to be used as recording media. Thus, for further improving the compression rate, it is desirable to carry out additional bit compression. Specifically, audio signals are recorded and/or reproduced using so-called IC cards. Bit-compressed data are recorded in and reproduced from the IC card.

Although an increase in the recording capacity and a reduction in costs of the IC card employing such a semiconductor memory are expected to be achieved with a progress in the semiconductor technology, there is a fear that the IC card, which has barely started to be supplied to the market, is short of capacity and expensive. Therefore, it may be conceived to transfer to the IC card the contents of other less expensive recording media of a larger capacity, such as a magneto-optical disc, by way of data exchange and re-recording operations. Specifically, a desired one of plural airs recorded in the magneto-optical disc may be dubbed into the IC card, and may be replaced by other air(s) whenever desirable. By repeatedly exchanging the contents of the IC card, a variety of airs may be played outdoors using a small number of IC cards on hand.

Meanwhile, the bandwidths and noise-to-signal characteristics which are necessary for various purposes are different from each other, in recording/reproducing audio signals. For example, when audio signals of high sound quality is needed, the bandwidth is required to be 15 kHz to 20 kHz, and the noise-to-signal characteristics needs to be good. The bit rate for achieving the bandwidth and the noise-to-signal characteristics may be relatively high. Normally, the bit rate is approximately 256 kbps to 64 kbps/channel. On the contrary, in the case in which a voice signal is used mainly, the bandwidth may be 5 kHz to 7 kHz, and it is not necessary to have high noise-to-signal characteristics. However, the bit rate is approximately 64 kbps to several kbps for elongating the recording/reproduction time as much as possible. Thus, it is necessary to provide a recording/reproducing apparatus which can satisfy plural purposes of different requirements as mentioned above and reduce economic burdens to the lowest possible level.

Conventionally, however, plural sampling frequencies need support in order to have plural modes of different bandwidths. Therefore, complication of the sampling frequency signal generating circuit and an increase in the LSI scale cannot be avoided. In the case in which the sampling frequencies of respective modes are different from each other, movement of information between respective modes is difficult. When information of high bit rate mode on a magneto-optical disc of large capacity is to be written in an IC card of small capacity in a low bit rate mode, the compression mode needs to be canceled once, and the signal needs to be returned to a signal on the time base and be compressed again at a low bit rate. Therefore, the volume of processing operation is large, making it difficult to carry out real-time processing. Then, as the bit rate of the mode becomes lower, the reduction in the number of usable bits leads to deterioration of sound quality. For example, with the bandwidth being narrowed, when the frequency division width for compression is constant regardless of frequency, the division of a 20 kHz band into 32 bands has a very large divisional bandwidth of approximately 700 Hz for a critical bandwidth of 100 Hz on a low frequency side, and has larger bandwidths than critical bands in most part of mid and low frequency sides, thereby significantly lowering efficiency.

According to EP-A-348 132 a data transmission and reception apparatus and a method capable of selecting either of two modes adding the same sampling frequency are provided, in which the bit numbers of one data are either m or n. The general object of the methods and the apparatus of said document is to handle data with different bit numbers (m, n) by the same coding and decoding processes by inserting m - n bits of dummy data bits. Thereby, the function of the encoder and decoder, respectively, according to said document do not change their modes when changing from one mode m to another mode n.

OBJECT AND SUMMARY OF THE INVENTION

In view of the above-described status of the art, the first object of the present invention is to prevent complication of the sampling frequency generating circuit and an increase in the LSI scale when there are plural bit rate modes. The second object of the present invention is to provide a compressed data recording and/or reproducing apparatus whereby a small volume of operation suffices for dubbing bit-compressed data from one recording medium such as a magneto-optical disc or an optical disc into another recording medium such as an IC card, or for reproducing the bit-compressed data from the latter recording medium such as an IC card. The third object of the present invention is to limit deterioration of sound quality in the low bit rate mode to the lowest possible level.

According to the present invention, there are provided digital signal processing apparatus as defined in claims 1 and 3 or methods as defined in claims 11 and 13 for data-compressing digital signals.

In the above-mentioned digital signal processing apparatuses or methods, an audio signal is supplied as an input signal, with the frequency width of a block controlling generation of quantization noise being broader on a high frequency side. Also, the following processing may be implemented. That is, for example, main data and/or sub data of a compression coding is not allocated to signal component in a band which is substantially equal to or above a signal passing band. Orthogonal transform for dividing a signal on the time base into plural bands on the frequency base and/or inverse orthogonal transform for converting the plural bands on the frequency base into the signal on the time base is used. The processing is implemented wherein the signal on the time base is divided into plural bands, each band of which is formed into plural blocks, each block being processed with orthogonal transform so as to produce coefficient data, thereby dividing the signal on the time base into the plural bands on the frequency base, and/or the inverse orthogonal transform for each block of each band is implemented wherein respective inverse orthogonal transform outputs are synthesized to produce a synthesis signal on the time base, thereby converting the plural bands on the frequency base into the signal on the time base. The divisional frequency width in division of the signal on the time base prior to the orthogonal transform into the plural bands on the frequency base and/or the synthesis frequency width from the plural bands in synthesis of the plural bands on the frequency base after the inverse orthogonal transform into the signal on the time base is made broader than on the high frequency side. The divisional frequency width and/or the synthesis frequency width is made the same in two consecutive bands on the lowest frequency side. In the frequency division and/or the frequency synthesis, the length of the maximum processing time block of a signal for recording and/or reproducing and the length of the maximum processing time block of a signal for transmitting and/or receiving are made the same as to at least a frequency division signal and/or a frequency synthesis signal on the highest frequency side, regardless of the modes of different data rates. Further, modified discrete cosine transform (MDCT) is employed as the orthogonal transform.

The apparatus or method according to the present invention, uses the same sampling frequency regardless of the difference in the bit rate of each mode, thereby preventing the complication of the sampling frequency signal generating circuit caused in the case of having plural sampling frequencies and the increase in LSI scale. Also, when sampling frequencies of the respective modes differ, the movement of data between modes can be easily carried out, which would otherwise be difficult. When data of high bit rate mode on a magneto-optical disc of large capacity is to be written in an IC card of small capacity in a low bit rate mode, it is not necessary to cancel the compression mode completely and to return the signal to a signal on the time base. Instead, it is possible, simply with additional processing, to realize compression processing of low bit rate mode, and to limit the increase in the processing operation volume to the least level, thus realizing real-time processing. Also, since operation processing in an unnecessary band on the high frequency range side is not implemented in the reduction of the signal passing band in the low bit rate mode, the reduction in the processing operation volume or remaining operation capability can be saved for additional operation processing for improving sound quality of the low bit rate mode. The presence of the band division prior to the orthogonal transform may serve for not implementing the operation processing of the unnecessary band on the high frequency range side. That is, if the entire divisional band on the high frequency range side is unnecessary, the processing of the divisional band is not needed at all. Even when the divisional band is partly used, the operation processing for the non-use band can be saved by sub-sampling processing for making usable only the band to be used.

In the mode of a lower bit rate, the number of usable bits is diminished, generating a need for preventing deterioration in sound quality. However, in the present invention, the maximum processing time block is elongated, thereby improving the compression rate. With the maximum processing time block being longer, accurate signal conversion from the time base to the frequency base can be realized, and the volume of sub-data such as scale factor and word length data can be reduced. Also, since the frequency width of at least most part of the quantization noise generating block on the frequency base is made broader on the high frequency range side, even though for example the bandwidth is narrowed in the low bit rate mode, the frequency division close to the critical band can be carried out on the mid and low frequency range sides, thus preventing the lowering of efficiency as in the case of uniform division. In the low bit rate mode, the main and sub data are not allocated to the band equal to and above the band to be used, thus avoiding loss of bit use. Also, in the case in which the bandwidth is narrowed, when the frequency divisional width for controlling the quantization noise is constant regardless of frequency, the division of a 20 kHz band into 32 bands generates a significantly broad frequency divisional width of 700 Hz for the critical bandwidth of 100 Hz on the low frequency range side and a broader divisional width than the critical band on the mid and low frequency range sides, thus causing considerable deterioration in efficiency. Therefore, in the present invention, the frequency divisional width for controlling the quantization noise is selected to become broader at least in most frequency divisional bands as the frequency becomes higher, so as to be close to the critical bandwidth. Also, in order to avoid the deterioration in sound quality following the lowering of bit rate, the length of the maximum compression processing block is greater as the bit rate becomes lower. When the bit-compressed data is dubbed from the recording medium such as a magneto-optical disc into the other recording medium such as an IC card, the data is dubbed without bit expansion or with additional compression, thus, reducing the operation volume. In addition, so-called high-speed dubbing corresponding to the compression rate can be carried out, thereby realizing efficient dubbing with a small quantity of information and in short time.

With the digital signal processing apparatus or method and the recording medium according to the present invention, by using one kind of sampling frequency, it is possible to prevent the complication of the sampling frequency signal generating circuit caused in the case of having plural sampling frequencies and the increase in the LSI scale. Also, the movement of data between modes of different bit rates can be easily carried out without complicated operation such as sampling frequency conversion. When the data of high bit rate mode on the magneto-optical disc of large capacity is to be written into the IC card of small capacity in the low bit rate mode, the compression processing in the low bit rate mode can be realized simply by additional processing, and the increase in the processing operation volume can be limited to the lowest level, thus realizing the real-time processing. Also, with the present invention, it is possible to prevent deterioration of sound quality in the low bit rate mode.

The above, and other objects, features and advantages of the invention, will be apparent in the following detailed description of an illustrative embodiment thereof which is to be read in connection with the accompanying drawings.

BRIEF DESCRIPTION OF THE DRAWINGS

Fig.1 is a block circuit diagram showing a schematic arrangement of a disc recording/reproducing apparatus as a concrete example of a recording/reproducing apparatus for compressed data according to the embodiment of the present invention.

Fig.2 is a view for illustrating contents recorded in a magneto-optical disc and an IC card.

Fig.3 is a schematic front view showing an example of appearance of the apparatus of the present embodiment.

Fig.4 is a block circuit diagram showing a concrete example of an efficient compression coding encoder usable for bit rate compression coding of the present embodiment.

Fig.5 is a view showing a data structure of a processing block of bit compression in each mode.

Fig.6 is a view showing an example of function of a bit allocation operation circuit.

Fig.7 is a view showing a spectrum of a band divided in consideration of each critical band and block floating.

Fig.8 is a view showing a masking spectrum.

Fig.9 is a view showing synthesis of a minimum audibility curve and a masking spectrum.

Fig.10 is a view for illustrating frequency and time showing a frequency band divided into 52 bands in consideration of a critical band and block floating in a processing block of 11.6 ms.

Fig.11 is a view for illustrating a case in which the length of a maximum processing time block is made greater between modes of different bit rates.

Fig.12 is a block circuit diagram for illustrating an arrangement of a case in which a signal bandwidth is narrowed between modes of different bit rates.

Fig.13 is a block circuit diagram showing a concrete example of a decoder of efficient compression coding usable for bit rate compression coding of the present embodiment.

DESCRIPTION OF THE PREFERRED EMBODIMENT

A preferred embodiment of the present invention will now be described with reference to the accompanying drawings.

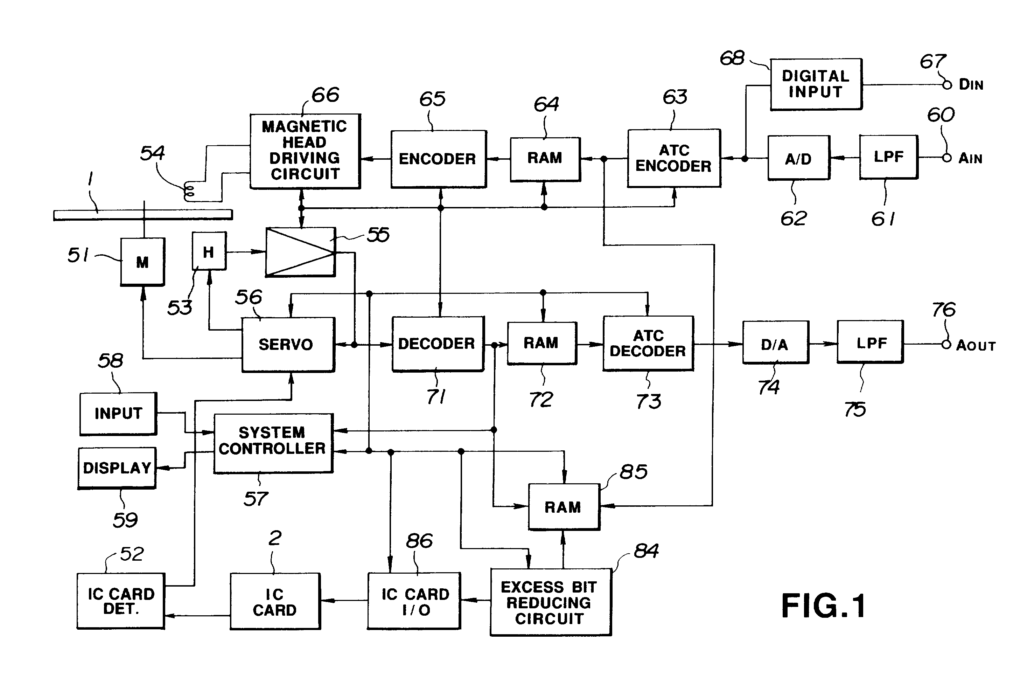

Fig.1 shows a schematic arrangement of an embodiment of a compressed data recording/reproducing apparatus as an example of the digital signal processing apparatus of the present invention.

In Fig.1, the recording/reproducing apparatus is constituted by a recording/reproducing unit 9 for a magneto-optical disc 1 as one recording medium and a recording unit 4 for an IC card 2 as another recording medium combined in one system. When, in a recording system on the side of the magneto-optical disc recording/reproducing unit 9, a signal reproduced from the magneto-optical disc 1 in a reproduction system is recorded in the IC card 2 in the IC card recording unit 4, reproduced compressed data (ATC audio data) which has been read by an optical head 53 from the magneto-optical disc 1 in the reproduction system, transmitted to a decoder 71 and processed with EFM demodulation, de-interleaving and error correction is transmitted to a memory 85 of the IC card recording unit 4. Then, the compressed data is processed with additional processing of variable bit rate coding processing window implemented by an additional compression unit 84 for implementing additional processing such as entropy coding to the memory 85, and is recorded in the IC card 2 via an IC card interfacing circuit 86. Thus, the reproduced compressed data is transmitted in a compressed state prior to being expanded by an ATC decoder, so as to be recorded in the IC card 2.

Meanwhile, in normal reproduction for audio listening, compressed data is read out from a recording medium (the recording medium 1) intermittently or in a burst-like manner by a predetermined data volume unit, e.g. 32 plus several sectors, and is expanded and converted into a continuous audio signal. In so-called dubbing, the compressed data in the medium is continuously read and transmitted to a recording system so as to be recorded. Thus, high-speed or short-time dubbing corresponding to a data compression ratio can be carried out.

A concrete arrangement of Fig.1 will be described in detail.

In the magneto-optical disc recording/reproducing unit 9 of the compressed data recording and/or reproducing apparatus shown in Fig.1, the magneto-optical disc 1 which is rotated and driven by a spindle motor 51 is used as a recording medium. In recording data in the magneto-optical disc 1, with the magneto-optical disc being irradiated with a laser light by an optical head 53, a modulated magnetic field corresponding to recording data is applied by a magnetic head 54, thereby carrying out so-called magnetic field modulation recording, and recording data along a recording track of the magneto-optical disc 1. In reproduction, the recording track of the magneto-optical disc 1 is traced with a laser light by the optical head 53, thus carrying out magneto-optical reproduction.

The recording/reproducing unit will be mainly described.

For example, the optical head 53 is constituted by a laser light source such as a laser diode, optical parts such as a collimator lens, an objective lens, a polarization splitter, a cylindrical lens, and a photodetector having a light receiving section of a predetermined pattern. The optical head 53 is provided in a position facing the magnetic head 54 via the magneto-optical disc 1. When data is recorded in the magneto-optical disc 1, the magnetic head 54 is driven by a head driving circuit 66 of a recording system, as later described, so as to apply a modulated magnetic field corresponding to the recording data, and a target track on the magneto-optical disc 1 is irradiated with the laser light by the optical head 53, thus carrying out thermomagnetic recording by a magnetic field modulation method. The optical head 53 detects a reflected light of the laser light radiated on the target track, for example, detecting a focal error by a so-called astigmatic method and detecting a tracking error by a so-called push-pull method. When the data is reproduced from the magneto-optical disc 1, the optical head 53 detects the focal error and tracking error, and at the same time, detects a difference of an angle of polarization (Kerr angle of rotation) of the reflected light from the target track of the laser light, thus producing a reproduction signal.

An output of the optical head 53 is supplied to an RF circuit 55. The RF circuit 55 extracts and supplies the focal error and tracking error from the output of the optical head 53 to a servo control circuit 56. At the same time, the RF circuit 55 converts the reproduction signal into a binary signal and supplies the binary signal to a decoder 71 of a reproducing system, as later described.

The servo control circuit 56 is constituted by, for example, a focal servo control circuit, a tracking servo control circuit, a spindle motor servo control circuit, and a thread servo control circuit. The focal servo control circuit implements focal control of an optical system of the optical head 53 so that the focal error signal is zero. The tracking servo control circuit implements tracking control of the optical system of the optical head 53 so that the tracking error signal is zero.

Further, the spindle motor servo control circuit controls the spindle motor 51 so as to rotate and drive the magneto-optical disc 1 at a predetermined rotational speed, e.g., at a constant linear velocity. The thread servo control circuit shifts the optical head 53 and the magnetic head 54 in a target track position of the magneto-optical disc 1 designated by a system controller 57. The servo control circuit 56, implementing the various kinds of control operations described above, transmits to the system controller 57 information indicating operational states of respective parts controlled by the servo control circuit 56.

A key input section 58 and a display section 59 are connected to the system controller 57. The system controller 57 controls the recording system and the reproducing system in an operational mode designated by input information through the key input section 58. The system controller 57 also controls the recording position and the reproducing position on the recording track traced by the optical head 53 and the magnetic head 54 on the basis of the sector-by-sector address information reproduced from the recording track of the magneto-optical disc 1 by header time or sub-code Q data. The system controller 57 also causes the bit compression mode information to be displayed on the display section 59, on the basis of the bit compression mode information in an ATC encoder 63 selectively switched by the key input section 58 and the bit compression mode information in the reproduced data produced from the RF circuit 55 by means of the reproducing system as later explained. At the same time, the system controller 57 causes the reproduction time to be displayed on the display section 59 on the basis of the bit compression rate in the bit compression mode and the reproducing position information on the recording track.

For displaying the reproduction time, the sector-by-sector address information (absolute time information) reproduced from the recording track of the magneto-optical disc 1 by the so-called header time or so-called sub-code Q data is multiplied by a reciprocal of the data compression rate in the data compression mode, for example, 4 for the data compression rate of 1/4, to find the actual time information which is displayed on the display section 59. It is to be noted that if, also in recording, the absolute time information is recorded in advance (pre-formatted) on the recording track of the magneto-optical disc, the pre-formatted absolute time information may be read and multiplied by a reciprocal of the data compression rate, thus displaying the current position by the actual recording time.

In the recording system of the recording/reproducing unit of the disc recording/reproducing apparatus, an analog audio signal $A_{IN}$ from an input terminal 60 is supplied via a low-pass filter 61 to an A/D converter 62, which quantizes the analog audio input signal $A_{IN}$. The digital audio signal from the A/D converter 62 is supplied to the ATC encoder 63. A digital audio input signal $D_{IN}$ from an input terminal 67 is supplied via a digital input interfacing circuit 68 to the ATC encoder 63. The ATC encoder 63 processes the digital audio PCM data at a prescribed transfer rate, quantized by the A/D converter 62, by subjecting it to bit compression (data compression) corresponding to the various modes of an ATC method shown in Table 1, and has its operating mode designated by the system controller 57. It is assumed that, in mode B, data is compressed data transmitted to a memory 64 and having the sampling frequency of 44.1 kHz and the number of bits per sample of 4. The data transfer rate in mode B is reduced to one-eighth the data transfer rate of 75 sectors/second according to the standard CD-DA format, that is, 9.375 sectors/second.

TABLE 1

| Sampling Frequency = 44.1 kHz | | | |
|---|---|---|---|
| MODE | BIT RATE | BANDWIDTH | MAXIMUM PROCESSING BLOCK LENGTH |
| | kbps/channel | kHz | msec |
| A | 128 | 22 | 11.6 |
| B | 64 | 13 | 23.2 |
| C | 32 | 5.5 | 34.8 |
| D | 16 | 3 | 46.4 |

In the embodiment of Fig.1, it is assumed that the sampling frequency of the A/D converter 62 is fixed at the sampling frequency of the standard CD-DA format, i.e., 44.1 kHz, and that the sampling frequency is maintained also in the ATC encoder 63, thus carrying out bit compression. At this time, since the signal passing band is narrowed in the lower bit rate mode, a cut-off frequency of the low-pass filter 61 is controlled and switched according thereto. That is, it suffices to simultaneously control and switch the sampling frequency of the A/D converter 62 and the cut-off frequency of the low-pass filter 61 in accordance with the compression mode.

The memory 64 has data writing and readout controlled by the system controller 57, and is used as a buffer memory for temporarily storing therein ATC data supplied from the ATC encoder 63 and for recording on the disc when necessary. That is, the compressed audio data supplied from the ATC encoder 63 in the stereo mode of the above-mentioned mode B has its data transfer rate reduced to one eighth the data transfer rate of 75 sectors/second of the standard CD-DA format, i.e., 9.375 sectors/second. These compressed data are continuously written in the memory 64. Although it suffices to record the compressed data (ATC data) at the rate of one of eight sectors in the above-mentioned manner, the data are recorded sector-continuously, as later explained, because of virtual infeasibility of such recording at an interval of eight sectors.

The recording is performed, after a non-recording period, in a burst-like manner at the same data transfer rate of 75 sectors/second as that for the standard CD-DA format, with a cluster composed of a predetermined number of sectors, such as 32 plus several sectors, as a recording unit. That is, the ATC audio data of the stereo mode of the above-mentioned mode B, written continuously at a lower transfer rate of 9.375 (= 75/8) sectors/second corresponding to the above-mentioned compression rate, are read out from the memory 64 as recording data in a burst-like manner at the above-mentioned transfer rate of 75 sectors/second. The overall data transfer rate for the read-out and recorded data, including that of the non-recording period, is the above-mentioned low rate of 9.375 sectors/second. However, the instantaneous data transfer rate within the time interval of the burst-like recording operation is the above-mentioned standard rate of 75 sectors/second. In this manner, if the rotational speed of the disc is the same speed as that of the standard CD-DA format, that is, the constant linear velocity, recording is performed with the same recording density and the same memory pattern as those of the CD-DA format.

The ATC audio data read out in a burst-like manner from the memory 64 at the above-mentioned instantaneous transfer rate of 75 sectors/second, i.e. recording data, are supplied to an encoder 65. It is to be noted that, in an data array supplied from the memory 64 to the encoder 65, one continuous recording unit is made up of a cluster consisting of a plurality of, e.g. 32 sectors, and several cluster-linking sectors arrayed before and after the cluster. These cluster-linking sectors are set so as to be longer than the interleaving length in the encoder 65 so that data of adjoining clusters remain unaffected by interleaving.

The encoder 65 processes the recording data supplied from the memory 64 in a burst-like manner by subjecting it to encoding for error correction, such as parity appending and interleaving, and EFM encoding. The encoded recording data from the encoder 65 are supplied to a magnetic head driving circuit 66. The magnetic head driving circuit 66 is connected to the magnetic head 54 for driving the magnetic head 54 so as to apply a magnetic field modulated in accordance with the recording data on the magneto-optical disc 1.

The system controller 57 carried out memory control for the memory 64 in the above-mentioned manner, and controls the recording position so that the recording data read out in a burst-like manner by the memory control from the memory 64 are continuously recorded in the recording track of the magneto-optical disc 1. The recording position on the recording track is controlled so that the recording position of the recording data read out in a burst-like manner from the memory 64 is controlled by the system controller 57, thus supplying to the servo control circuit 56 a control signal designating the recording position on the recording track of the magneto-optical disc 1.

The reproducing system of the magneto-optical disc recording/reproducing unit 9 will now be described.

The reproducing system is used for reproducing the data continuously recorded on the recording track of the magneto-optical disc 1 by the above-mentioned recording system, and is provided with a decoder 71. The decoder 71 is supplied with a reproduction output which is produced by tracing the recording track of the magneto-optical disc 1 by the laser light from the optical head 53 and which is converted into corresponding binary signals by the RF circuit 55. At this time, data can be read out from a reproduction-only optical disc which is the same as a so-called compact disc (CD) as well as from the magneto-optical disc 1.

The decoder 71 is a counterpart of the encoder 65 of the above-mentioned recording system, and processes the binary reproduction output from the RF circuit 55 by the above-mentioned decoding and EFM decoding, thus reproducing the ATC audio data of the above-mentioned mode B at the transfer rate of 75 sectors/second which is faster than the regular transfer rate at the mode B. The reproduced data obtained by the decoder 71 is supplied to a memory 72.

The memory 72 has data writing and readout controlled by the system controller 57, and has the reproduced data supplied from the decoder 71 at the transfer rate of 75 sectors/second is written therein in a burst-like manner at the transfer rate of 75 sectors/second. The reproduced data written in a burst-like manner in the memory 72 at the above-mentioned transfer rate of 75 sectors/second are continuously read out at the regular transfer rate of 9.375 sectors/second of the stereo mode of the mode B.

The system controller 57 implements such memory control as to write the reproduced data in the memory 72 at the transfer rate of 75 sectors/second and to continuously read out the reproduced data from the memory 72 at the transfer rate of 9.375 sectors/second. The system controller 57 implements the memory control for the memory 72, and also controls the reproducing position so that the reproduced data written in a burst-like manner from the memory 72 are continuously reproduced from the recording track of the magneto-optical disc 1. The reproducing position is so controlled that the reproducing position of the reproduced data read out in a burst-like manner from the memory 72 is controlled by the system controller 57 and that a control signal designating the reproducing position on the recording track of the magneto-optical disc 1 or optical disc 1 is supplied to the servo control circuit 56.

The ATC audio data of the above-mentioned mode B, as the reproduced data read out continuously from the memory 72 at the transfer rate of 9.375 sectors/second, is supplied to an ATC decoder 73. The ATC decoder 73 is a counterpart of the ATC encoder 63 of the recording system, and has its operating mode designated by the system controller 57. The ATC decoder 73 reproduces 16-bit digital audio data by data expansion (bit expansion) of the ATC data of the stereo mode of mode B by a factor of eight. The digital audio data from the ATC decoder 73 is supplied to a D/A converter 74.

The D/A converter 74 converts the digital audio data from the ATC decoder 73 into analog signals, thus forming analog audio output signals $A_{OUT}$. The analog audio signals $A_{OUT}$ from the D/A converter 74 is outputted via a low-pass filter 75 from an output terminal 76.

Then, the IC card recording unit 4 of the compressed data recording and/or reproducing apparatus will be described.

The analog audio input signals $A_{IN}$ supplied to the recording unit 4 are supplied via a low-pass filter to an A/D converter so as to be quantized. The digital audio signals produced from the A/D converter are transmitted to the additional compression unit 84 which is a kind of variable bit rate encoder and implements so-called entropy encoding, so as to be entropy-encoded. The signals transmitted to the additional compression unit 84 are, specifically, the signals obtained by recording the analog audio input signals $A_{IN}$ via the input terminal 60, the low-pass filter 61, the A/D converter 62 and the encoder 63 to the memory 85. Accordingly, the processing in the additional compression unit 84 such as entropy encoding is carried out, accompanying data readout from and data writing in the memory 85. The data encoded by variable bit rate compression encoding from the additional compression unit 84 for implementing entropy encoding is recorded in the IC card via the IC card interfacing circuit 86. It is a matter of course that, in the present invention, fixed bit rate recording without implementing entropy encoding may be carried out.

Meanwhile, the compressed data (ATC data) from the decoder 71 of the magneto-optical disc recording/reproducing unit 9 is supplied directly, without expansion, to the memory 85 of the IC card recording unit 4. This data transfer is carried out by the system controller 57 controlling the memory 85 etc. during so-called high-speed dubbing. Meanwhile, the compressed data from the memory 72 may be transmitted to the memory 85. Recording the data from the magneto-optical disc or optical disc in the IC card with a changed and lowered bit rate is suitable for recording in an IC card which is high in price per recording capacity. This is convenient because of absence of sampling frequency conversion, in which sampling frequencies need not be the same regardless of the bit rate mode. The actual additional compression is carried out by the additional compression unit 84.

The so-called high-speed digital dubbing is hereinafter explained. During the so-called high-speed dubbing, the system controller 57 implements a predetermined high-speed dubbing controlling operation on actuating a dubbing key etc. of the key input section 58. Specifically, the compressed data from the decoder 71 is directly supplied to the memory 85 of the IC card recording system and is processed with variable bit rate encoding by the additional compression unit 84, so as to be recorded on the IC card 2 via the IC card interfacing circuit 86. If the ATC data of the above-mentioned mode B is recorded in the magneto-optical disc 1, an eight-fold volume of the compressed data is continuously read out from the decoder 71. Meanwhile, whether or not the IC card 2 has been inserted into the recording unit 4 is detected by an IC card detection circuit 52. The IC card detection circuit 52, when detecting the insertion of the IC card 2 into the recording unit 4, outputs a signal therefor to the recording/reproducing unit 9. The recording/reproducing unit 9 receives the signal and implements the processing for dubbing.

Thus, during the high-speed dubbing, compressed data corresponding to the eight-fold time duration on the real-time basis (in the case of the stereo mode of mode B) is continuously produced from the magneto-optical disc 1, and is entropy-encoded and recorded in the IC card 2, thus realizing high-speed dubbing at a speed eight times higher. The magnification of the dubbing speed is varied with different compression modes. Dubbing may also be performed at a speed equal to and higher than the magnification of compression. In such case, the magneto-optical disc 1 is rotationally driven at a speed several times the steady-state speed.

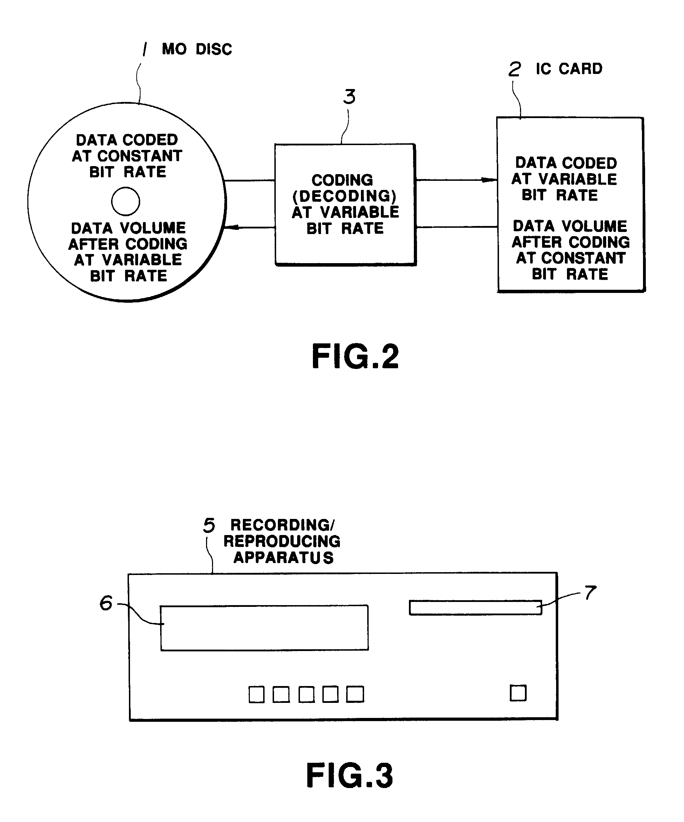

Referring to Fig.2, the data encoded with bit compression coding at a constant bit rate and the information of the data volume when the data are encoded with bit compression coding in an additional compression/expansion block 3, that is, the data recording capacity required for recording on the IC card 2, are recorded in the magneto-optical disc 1. In this manner, the number of airs which are recorded in the magneto-optical disc 1 and which may be recorded in the IC card 2 and the combination of these airs may be instantly known by reading out the data volume information. It is a matter of course that additional compression operation into a lower bit rate mode of a lower fixed bit rate can be carried out by the additional compression/expansion block 3, instead of the variable bit rate mode.

Conversely, if not only the data encoded by bit compression coding at the variable bit rate but also the information of the volume of data encoded with bit compression at a constant bit rate are recorded in the IC card 2, the volume of data in transmitting and recording data such as airs from the IC card 2 to the magneto-optical disc 1 may be known promptly. It is a matter of course that the data encoded by bit compression coding at the constant bit rate as well as the data encoded by the bit compression coding at the variable bit rate can be recorded in the IC card 2.

Fig.3 shows a front view of appearance of a compressed data recording and/or reproducing apparatus 5, having the arrangement shown in Fig.1, provided with a magneto-optical disc or optical disc inserting section 6 and an IC card inserting slot 7. It is a matter of course that the disc and the IC card may be separate sets, with signals being transmitted between them by means of a cable.

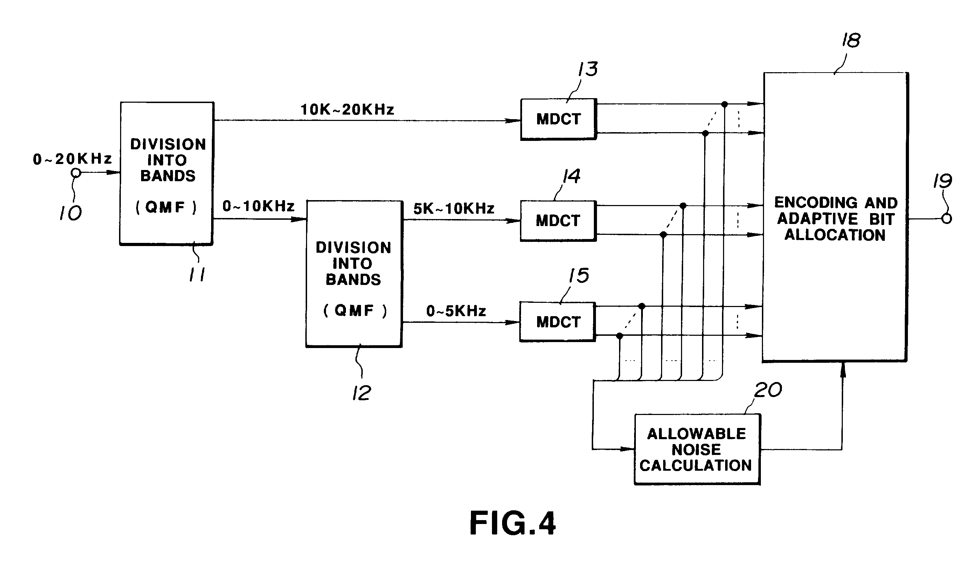

The technique of high efficiency compression coding employed in the compressed data recording and/or reproducing apparatus of the present embodiment will now be described in detail. That is, the technique of high efficiency coding of input digital signals, such as audio PCM signals, using the techniques of sub-band coding (SBC), adaptive transform coding (ATC) and adaptive bit allocation (APC-AB), is hereinafter explained with reference to Fig.4 and the subsequent drawings.

In a high efficiency encoding apparatus, concretely shown in Fig.4, input digital signals are divided in frequency into plural frequency bands, two adjacent bands thereof on the lowest frequency range side having the same bandwidth, and the bandwidths will be broader in the direction of the increasing frequency. Orthogonal transform is carried out for each frequency band, and resulting spectrum data along the frequency axis are encoded by adaptive bit allocation for each of so-called critical bands in consideration of human auditory characteristics as later explained, on the low frequency range side, and for each of sub-divided bands produced by dividing the critical band in consideration of so-called block floating efficient, on the mid-high frequency range side. Normally, this block becomes a quantization noise generating block. Further, in the present embodiment of the invention, the block size or block length is adaptively changed in accordance with the input signal before the orthogonal transform, and floating processing is carried out for each of the blocks.

That is, in Fig.4, audio PCM signals in the range of the frequency of 0 to 22 kHz are supplied to an input terminal 10, when the sampling frequency is 44.1 kHz. These input signals are divided in frequency by a frequency dividing filter 11, such as a so-called QMF filter, into a band of 0 to 11 kHz and a band of 11 kHz to 22 kHz, while the signals in the range of 0 to 11 kHz are divided by a frequency dividing filter 12, such as the so-called QMF filter, into a band of 0 to 5.5 kHz and a band of 5.5 kHz to 11 kHz. The signals in the range of from 11 kHz to 22 kHz from the filter 11 are transmitted to a modified discrete cosine transform (MDCT) circuit 13, which is an example of the orthogonal transform circuit, while the signals in the range of from 5.5 kHz to 11 kHz from the frequency dividing filter 12 are supplied to an MDCT circuit 14 and the signals in the range of from 0 to 5.5 kHz from the frequency dividing filter 12 are supplied to an MDCT circuit 15, thus implementing MDCT processing, respectively.

As a measure for dividing input digital signals in frequency into plural frequency bands, the QMF filter is noted, as described in R.E. Crochiere, Digital coding of speech in subbands, Bell Syst. Tech. J., Vol.55, No.8, 1976. Also, a method of filter division of uniform bandwidth is described in Joseph H. Rothweiler, Polyphase Quadrature Filters - A new subband coding technique, ICASSP 83, BOSTON. The above-mentioned orthogonal transform is exemplified by orthogonal transform of dividing input audio signals into blocks at a predetermined interval of unit time (frame) and implementing, for each of the blocks, fast Fourier transform (FFT), cosine transform (DCT) and modified DCT transform (MDCT), thereby converting the time base into the frequency base. MDCT is described in J.P.Princen, A.B.Bradley, Modified DCT, Univ. of Surrey, Royal Melbourne Inst. of Tech., Subband/Transform Coding Using Filter Bank Designs Based on Time Domain in Aliasing Cancellation, ICASSP 1987.

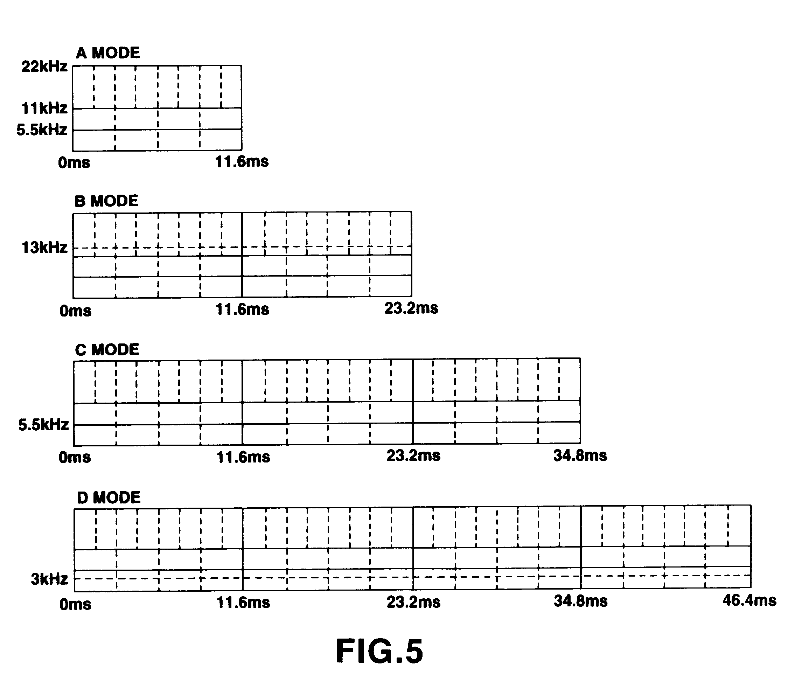

Fig.5 shows concrete examples of the blocks of the respective bands supplied to the MDCT circuits 13 to 15 in the respective modes for standard input signals. In the concrete examples, shown in Fig.5, three filter output signals from the band dividing filters 11, 12 shown in Fig.4 have plural orthogonal transform block sizes separately for the respective bands, and have time resolution thereof switched by temporal characteristics of the signals. The time length of the maximum processing block in increased and the signal passing bandwidth is narrowed in the direction of diminishing bit rate of the mode.

That is, in the case of mode A, the orthogonal block size is made as large as 11.6 ms when the signal is temporally quasi-stationary. When the signal is non-stationary, the orthogonal transform block size is further divided into four in the band having the frequency of not higher than 11 kHz, and the orthogonal transform block size is divided into eight in the band having the frequency of not lower than 11 kHz.

In the case of mode B, the time length of the processing block is twice that of mode A, that is, 23.2 ms, and the signal passing bandwidth is narrowed to 13 kHz. The orthogonal transform block size is increased to 23.2 ms when the signal is temporally quasi-stationary, and the orthogonal transform block size is divided into two so as to be 11.6 ms when the signal is non-stationary. When the signal further becomes non-stationary, the orthogonal transform block size is further divided into four in the band having the frequency of not higher than 11 kHz, and is further divided into eight in the band having the frequency of not lower than 11 kHz. On the other hand, the signal passing bandwidth is set up to 13 kHz. In this case, the filter output signals prior to orthogonal transform can be 1/2-sampled or 1/4-sampled in signals in the band having the frequency of 11 kHz to 22 kHz, thus avoiding excess signal processing for the bands equal to and above the signal passing band.

The length of the maximum processing time block is increased and the signal passing bandwidth is narrowed, in sequence of mode C and mode D. It is a matter of course that the length of the maximum processing time block and the signal passing bandwidth do not need to be different in all the modes but may have the same value. Even though the length of the maximum processing time block is greater in the low bit rate mode, a short processing time block of plural processing time blocks of the mode may be selectively used for encoding, thereby shortening the temporal delay.

Returning to Fig.4, spectrum data on the frequency axis or MDCT coefficient data, obtained through MDCT processing by the MDCT circuits 13 to 15, are grouped together in so-called critical bands on the low frequency range side, and have the critical bandwidth further divided in consideration of effectiveness of block floating on the mid and high frequency range sides, thus to be supplied to an adaptive bit allocation encoding circuit 18. The critical bands means the frequency ranges which are divided in consideration of human auditory sense, and each denotes a band of a narrow-band noise which has the intensity equal to that of a pure sound having the frequency in the vicinity of that of the noise and is capable of masking the pure sound. Each critical band has a bandwidth which becomes broader in the direction of the increasing frequency. The entire frequency range of 0 to 22 kHz is divided into e.g. 25 critical bands.

A bit allocation calculating circuit 20 finds the masking quantity for each divided band taking the critical band and block floating into account, in consideration of the so-called masking effect, on the basis of the spectrum data divided in consideration of the critical band and block floating. The bit allocation calculating circuit 20 also finds the number of allocated bits for each band on basis of the energy or peak value for each divided band in consideration of the masking quantity, the critical band and block floating, thus transmitting the resulting data to the adaptive bit allocation encoding circuit 18. Spectrum data or MDCT coefficient data are re-quantized by the adaptive bit allocation encoding circuit 18 in accordance with the numbers of bits allocated to the respective bands. The data encoded in this manner are taken out through an output terminal 19.

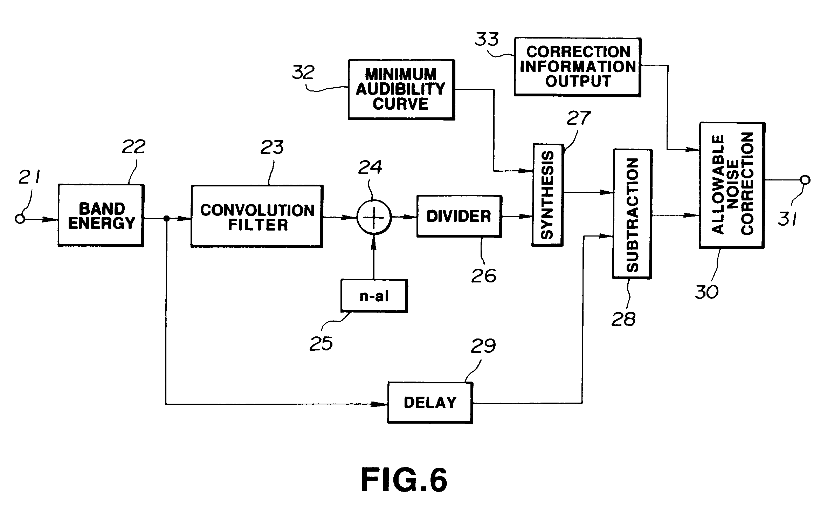

Fig.6 shows, in a block circuit diagram, a schematic arrangement of a concrete example of the bit allocation calculating circuit 20. In Fig.6, the spectrum data on the frequency axis are supplied from the MDCT circuits 13 to 15 to an input terminal 21.

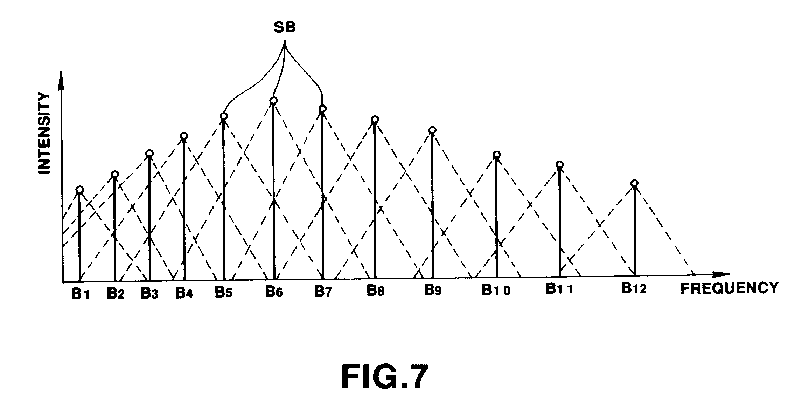

The input data on the frequency axis are supplied to an energy calculating circuit 22 for each band, in which the energy for each divided band taking account of the masking quantity, the critical band and block floating is found by calculating the sum of amplitudes in each band. The peak or mean values of the amplitudes may also be used instead of the energies of the respective bands. The spectrum of the sum of the respective bands, as an output from the energy calculating circuit 22, is indicated by SB in Fig.7. However, the number of the divided bands taking account of the masking quantity, the critical band and block floating is expressed by 12 (for $B_1$ to $B_{12}$) in Fig.7, for simplifying the drawing.

For taking account of the effects of the spectrum SB on masking, a convolution operation is carried out, in which the spectra SB are multiplied by predetermined weighting coefficients and the resulting products are summed together. Therefore, the outputs of the band energy calculating circuit 22, that is, the values of the spectra SB, are supplied to a convolution filter circuit 23. The convolution filter circuit 23 is composed of plural delay elements for sequentially delaying input data, plural multipliers, for example, 25 multipliers corresponding to the respective bands, for multiplying the outputs of these delay elements by filter coefficients, that is, the weighting functions, and an adder for calculating the sum of the respective multiplier outputs. By this convolution operation, the sum of the portions indicated by broken lines in Fig.7 are calculated. Meanwhile, the masking means a phenomenon in which a signal becomes inaudible to the human ears by being masked by another signal. Such masking effects may be classified into time axis masking effects due to audio signals on the time axis and concurrent masking effects due to signals on the frequency axis. By these masking effects, any noise that may be present in the masked portion becomes inaudible. For this reason, the noise in the masked region is allowable in actual audio signals.

In concrete examples of the multiplication coefficients (filter coefficients) of the respective multipliers of the convolution filter circuit 23, if the coefficient of a multiplier M for an arbitrary band is 1, outputs of the respective delay elements are multiplied by coefficients 0.15, 0.0019, 0.000086, 0.4, 0.06 and 0.007 by multipliers M-1, M-2, M-3, M+1, M+2 and M+3, respectively, thus implementing the convolution operations on the spectrum SB. Meanwhile, M is an arbitrary integer of from 1 to 25.

The output of the convolution filter circuit 23 is supplied to a subtractor 24. The subtractor 24 is adopted for finding a level $\alpha$ corresponding to an allowable noise level, as later described, in the convolved region. The level $\alpha$ corresponding to the allowable noise level is such as to give an allowable noise level for each band by inverse convolution as later described. A permissible function (function representing the masking level) for finding the level $\alpha$ is supplied to the subtractor 24. The level $\alpha$ is controlled by increasing or decreasing the permissible function. The permissible function is supplied from an (n-ai) function generating circuit 25 now to be described.

If the number given to the critical bands from the low frequency range toward the higher range is $\underline{i}$, the level $\alpha$ corresponding to the allowable noise level is found from the following formula (1):

$$\alpha = S - (n - ai) \tag{1}$$

where n and a are constants, with a > 0, and S is an intensity of the convolved Burke spectrum, with (n-ai) in the above formula being the permissible function. In the present embodiment, n = 38 and a = 1, in which case optimum encoding may be achieved without deterioration in sound quality.

The level $\alpha$ is found in this manner, and the corresponding data are transmitted to a divider 26. The divider 26 is adopted for inversely convolving the level $\alpha$ in the convolved region. Thus, through the inverse convolution, the masking spectrum may be found from the level $\alpha$. That is, the masking spectrum becomes the allowable noise level. Although the inverse convolution needs complex processing, it is carried out by the simplified divider 26 in the present embodiment.

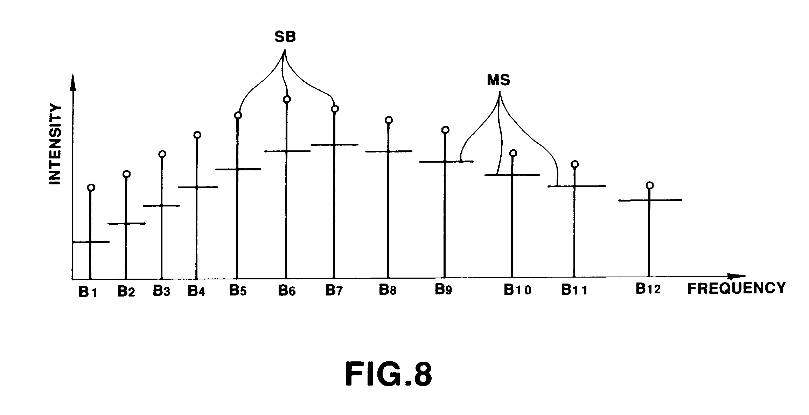

The masking spectrum is transmitted via a synthesis circuit 27 to a subtractor 28. The subtractor 28 is supplied with an output of the band energy detection circuit 22, that is, the spectrum SB, via a delay circuit 29. Through the subtraction between the masking spectrum and the spectrum SB by the subtractor 28, the part of the spectrum SB below the level indicated by the masking spectrum MS is to be masked, as shown in Fig.8.

The output of the subtractor 28 is taken out from an output terminal 31 via an allowable noise correction circuit 30, and is transmitted to a ROM, not shown, in which the information of the numbers of allocated bits is stored. This ROM outputs the information of the numbers of bits allocated to the bands, in accordance with the output from the subtractor 28 via the allowable noise correction circuit 30, that is, level data of the difference between the band energies and the outputs of the noise level setting means. The information of the numbers of the allocated bits is supplied to the adaptive bit allocation encoding circuit 18, so that the spectrum data on the frequency axis from the MDCT circuits 13, 14 and 15 are quantized with the numbers of bits allocated to the respective bands.

In sum, the adaptive bit allocation encoding circuit 18 quantizes the spectrum data for the respective bands with the numbers of bits allocated in accordance with the level of the differences between the energies of the divided bands taking account of the masking quantity, the critical band and block floating, and the outputs of the noise level setting means. It is to be noted that the delay circuit 29 is provided for delaying the spectrum SB from the energy detection circuit 22 in consideration of the delay caused in the circuits prior to the synthesis circuit 27.

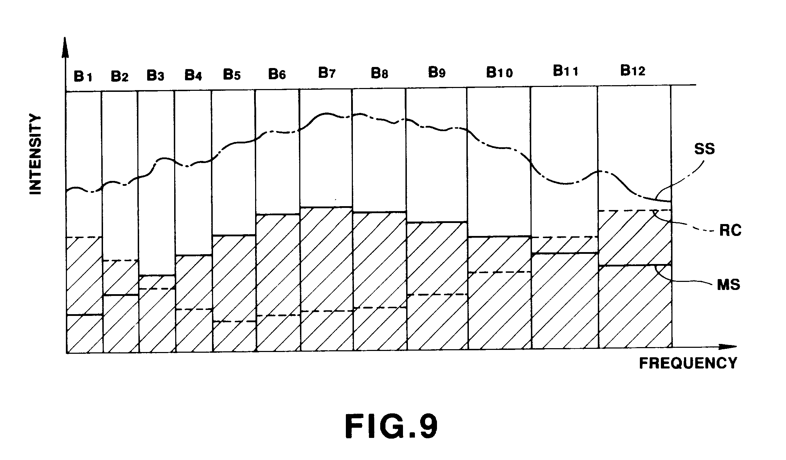

In the synthesis by the synthesis circuit 27, data indicating a so-called minimum audibility curve RC from a minimum audibility curve generator 32, the curve exhibiting characteristics of the human auditory sense as shown in Fig.9, can be combined with the above-mentioned masking spectrum MS. In the minimum audibility curve, a noise is inaudible if its absolute level is equal to and lower than the minimum audibility curve. The minimum audibility curve becomes different with e.g. difference in the playback volume, even with the same coding. However, in an actual digital system, there is no significant difference in the manner of entrance of the music of, for example, a 16 bit dynamic range. Therefore, if the quantization noise in the frequency range near 4 kHz, which is most audible to human ears, becomes inaudible, the quantization noise equal to and lower than the level of the minimum audibility curve is thought to be inaudible in other frequency ranges.

Accordingly, on the assumption that the system is used in such a manner that the noise near 4 kHz of the word length of the system is inaudible, if the allowable noise level is to be obtained by synthesizing the minimum audibility curve RC and the masking spectrum MS, the allowable noise level can reach up to the portion indicated by slant lines in Fig.9. Meanwhile, in the present embodiment, the level of 4 kHz of the minimum inaudibility curve is matched with the minimum level corresponding to e.g. 20 bits. Also, the signal spectrum SS is shown in Fig.9.

The allowable noise correction circuit 30 corrects the allowable noise level in an output of the subtractor 28 on the basis of e.g. the information of an equal loudness curve which is transmitted thereto from a correction information outputting circuit 33. Meanwhile, the equal loudness curve is related to certain characteristics of the human auditory sense, and is found by connecting, into a curve, the pressures of sounds at the respective frequencies which are heard with the same magnitude as the pure sound of 1 kHz. The equal loudness curve is also called an equal sensitivity curve. The equal loudness curve delineates substantially the same curve as that of the minimum audibility curve shown in Fig.9. In the equal loudness curve, a sound with a sound pressure lower by 8 to 10 dB than the sound pressure at 1 kHz is heard with the same magnitude as 1 kHz sound, in the vicinity of 4 kHz, whereas a sound cannot be heard in the vicinity of 50 kHz unless the sound pressure is higher by about 15 dB than the sound pressure at 1 kHz. For this reason, the noise (allowable noise level) exceeding the level of the minimum audibility curve is preferably provided with frequency characteristics given by the curve corresponding to the equal loudness curve. Thus, it will be appreciated that correction of the allowable noise level taking account of the equal loudness curve is suitable for the characteristics of the human auditory sense.

The correction information outputting circuit 33 may also be designed for correcting the allowable noise level on the basis of information of errors between the detected output of the output information volume (data volume) in quantization by the encoding circuit 18 and the target bit rate for the ultimate encoded data. That is, the total number of bits produced by implementing in advance transient adaptive bit allocation to the totality of the bit allocation unit blocks may have an error for a constant number of bits (target value) determined by the bit rate of the ultimate encoded output data, so that bit reallocation needs to be carried out for reducing the error to zero. Specifically, if the total number of allocated bits is smaller than the target value, the number of bits corresponding to the difference is distributed to the unit blocks for bit addition. On the other hand, if the total number of bits is larger than the target value, the number of bits corresponding to the difference is distributed to the unit blocks for bit reduction.

To this end, an error of the total number of allocated bits for the target value is detected, and the correction information outputting circuit 33 outputs correction data for correcting the numbers of the allocated bits on the basis of the error data. If the error data indicates bit shortage, more bits are used per unit block, so that the data volume is larger than the above-mentioned target value. If the data volume indicates a data excess, a smaller number of bits suffice per unit block, and therefore the data volume is less than the target value. Thus, the correction information outputting circuit 33 outputs the correction data for correcting, in accordance with the error data, the allowable noise level in an output of the subtractor 28 on the basis of information data of the equal loudness curve. These correction data are transmitted to the allowable noise correction circuit 30, thus correcting the allowable noise level from the subtractor 28. In the system as described above, data produced by processing the orthogonal transform output spectrum as main information by sub-information, a scale factor showing the state of the block floating as the sub-information, and word length, can be obtained and transmitted from the encoder to the decoder.

The signal processing between modes of different bit rates will be described, with reference to an example of conversion from mode A to mode B.

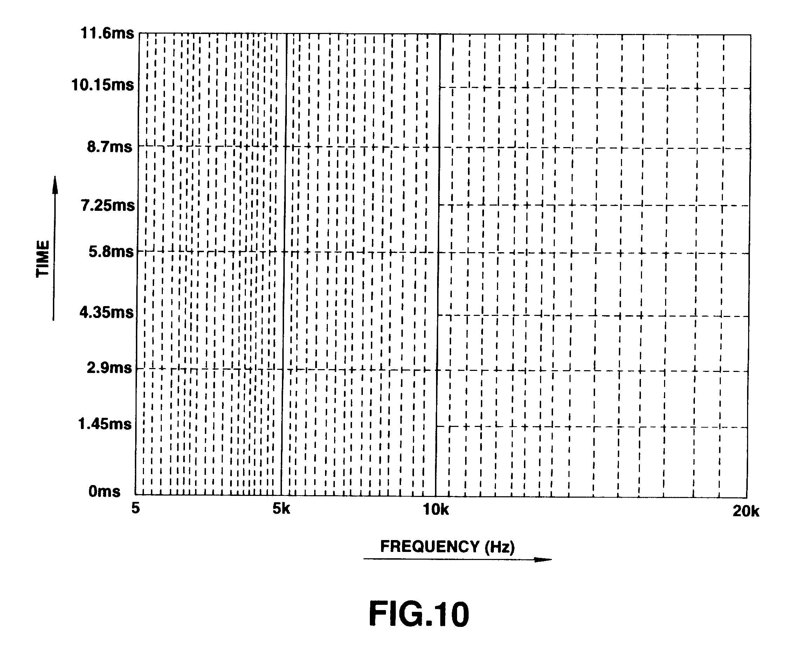

In mode A, processing is determined in view of the signal in the maximum block length of 11.6 ms, as shown in Fig.10. When the mode is converted to mode B, it is confirmed that two adjacent blocks of 11.6 ms have been both converted with the maximum block length in mode A. Only when the above is confirmed, it is then confirmed that the two blocks are similar to each other in scale factors and word lengths. At this time, the scale factors and word lengths of the two adjacent blocks of 11.6 ms are made common so as to reduce the volume of sub-information and increase the volume of main information, thereby preventing deterioration in sound quality due to the lowered bit rate.

The number of spectrum divided blocks taking account of the critical band and block floating in 11.6 ms is 52 in the entire range indicated by broken lines in Fig.10 when the maximum processing block is selected. Of the 52 divided blocks, 20 are present in the lower frequency range, and 16 each are present in the mid and the higher frequency ranges, respectively. When the length of the processing block is halved, the frequency width is two-fold so as to maintain the number of the divided blocks.

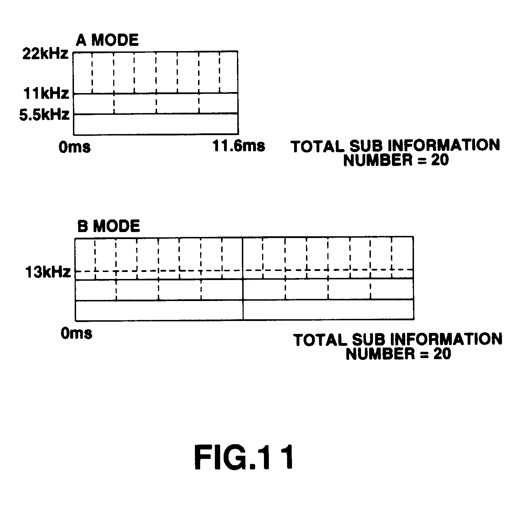

Referring to Fig.11, the scale factor and the word length in the lower frequency range of 20 blocks for 11.6 ms in mode A and 20 blocks for 23.2 ms in mode B. In mode A of Fig.11, since the signal is of an input not taking the maximum processing block size in the mid and high frequency ranges, the frequency width is two-fold, thereby halving the number of sub-information. That is, both the mid and the high frequency ranges have the scale factor and the word length of 8 divided blocks for 11.6 ms. This additional operation quantity is insignificant from the viewpoint of the operation quantity of the entire compression.

The reduction in the bandwidth in low bit rate conversion will now be described.

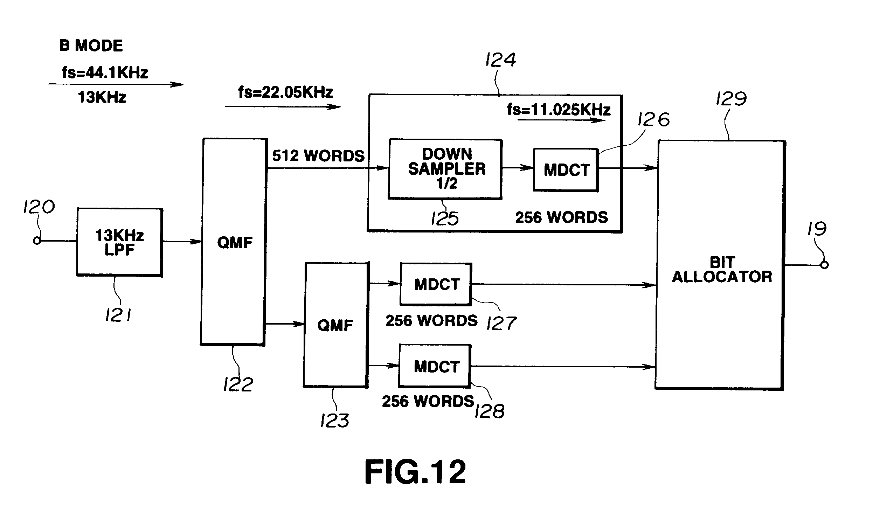

Fig.12 shows a concrete arrangement of the above-mentioned reduction in the bandwidth. Referring to Fig.12, when signals on the time axis of the sampling frequency of 44.1 kHz through an input terminal 120 are to be compressed from the start, the signal band of the time-base signal is diminished by a low-pass filter (LPF) 121 of the cut-off frequency of 13 kHz corresponding to the reduction in the bandwidth. Then, of signals band-divided by QMF filters 122, 123 similar to those described before, signals (outputs of the QMF filter 123) excluding outputs on the high frequency range side from the QMF filter 122 are processed with orthogonal transform similar to that of mode A, in MDCT circuits 127, 128 for carrying out the same orthogonal transform as that described before. On the contrary, the outputs on the high frequency range side from the QMF filter 122 are down-sampled at a proportion of 1/2 by a down sampling circuit 125 for a band signal processing circuit 124. The signals having the number of samples halved by the down sampling circuit 125 are processed with MDCT transform of 256 points by a next MDCT circuit 126. The outputs of these MDCT circuits 126 to 128 are transmitted to an adaptive bit allocation encoding circuit 129 similar to the one described above, and are outputted from the terminal 19. Meanwhile, the band signal processing circuit 124 can implement down sampling at a proportion of 1/4. Also, when the band diminution to, for example, 11 kHz instead of the above-mentioned 13 kHz is to be carried out, it suffices to eliminate the band signal processing circuit 124 provided on the high frequency range side.

It is to be noted that the present invention is not limited to the embodiment described above. For example, the units 9, 4 for one recording/reproduction medium (magneto-optical disc 1) and the other recording/reproduction medium (IC card 2) need not be integrated, but can be connected by a data transmission cable. In addition, the present invention can be applied to the signal processing apparatus not only for audio PCM signals but also for digital speech signals and digital video signals.

Also, the present invention may have an arrangement in which the synthesis processing of the minimum audibility curves is not carried out. In this case, the minimum audibility curve generating circuit 32 and the synthesis circuit 27 in Fig.6 are not necessary, and the output from the subtractor 24 is inversely convolved by the divider 26 and is then promptly transmitted to the subtractor 28.

Further, there are a variety of bit allocation methods, among which fixed bit allocation, simple bit allocation due to each band energy of the signal, or combination of fixed bit allocation and variable bit allocation may be used.

Also, dubbing at a higher speed than the bit compression rate may be carried out by driving the magneto-optical disc 1 at a rotational speed higher than the stationary speed. In this case, the high-speed dubbing can be carried out within the allowable range of the data transmission speed.

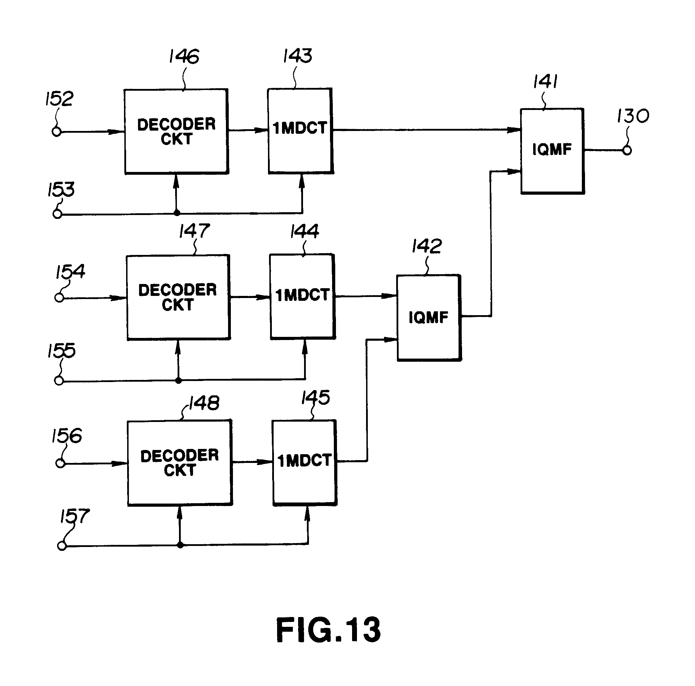

Fig.13 shows, in a schematic block diagram, a decoding apparatus corresponding to the high efficiency encoding apparatus of the present embodiment. In Fig.13, input terminals 152, 154, 156 are supplied with encoded data from the encoding apparatus, and input terminals 153, 155, 157 are supplied with data of sub-information from the encoding apparatus. The encoded data and the sub-information data are transmitted to respective decoding circuits 146, 147, 148, where the encoded data are decoded on the basis of the sub-information data. The data thus decoded are transmitted to IMDCT circuits 143, 144, 145, which implements inverse processing (IMDCT processing) of the MDCT processing in the MDCT circuits 13, 14, 15 of the encoding apparatus. The IMDCT circuits 143, 144, 145 are supplied with the respective sub-information data. Accordingly, the IMDCT processing in the IMDCT circuits 143, 144, 145 is carried out on the basis of the sub-information data. An output of the IMDCT circuit 143 is transmitted to a band synthesis filter (IQMF) circuit 141 for implementing inverse processing of that of the QMF band dividing filter 11. Outputs of the IMDCT circuits 144, 145 are transmitted to a band synthesis filter (IQMF) circuit 142 for implementing inverse processing of that of the band dividing filter 12. The output of the band synthesis filter circuit 142 is also transmitted to the band synthesis filter circuit 141. Thus, digital audio signals produced by synthesizing the signals divided into respective bands are to be obtained from the band synthesis filter circuit 141. The audio signals are outputted from an output terminal 130.

## Claims

1. Apparatus for deriving a compressed digital signal from a digital input signal by compressing the digital input signal in a selected one of at least two compression modes, the compressed digital signal having a different bit rate in each of the compression modes, the apparatus comprising:

   receiving means (120) for receiving the digital input signal at a fixed sampling frequency, the sampling frequency being invariable between the compression modes;
   a low-pass filter (121) having a cut-off frequency set according to the selected one of the compression modes, the low-pass filter receiving the digital input signal and providing a bandwidth-limited signal; and
   compressor means (13, 14, 15) for deriving the compressed digital signal from the bandwidth-limited signal.

2. The apparatus of claim 1, wherein:

   the apparatus additionally comprises block dividing means for dividing the bandwidth-limited signal in time into blocks, each block having a block length, the block lengths of the blocks having a maximum block length depending on the selected one of the compression modes; and
   the compressor means derives the compressed digital signal from the blocks of the bandwidth-limited signal.

3. Apparatus for deriving a compressed digital signal from a digital input signal by compressing the digital input signal in a selected one of at least two compression modes, the compressed digital signal having a different bit rate in each of the compression modes, the apparatus comprising:

   means for receiving (120) the digital input signal at a fixed sampling rate; the sampling rate being invariable between the compression modes;
   block dividing means for dividing the digital input signal in time into blocks, each block having a block length, the block lengths of the blocks having a maximum block length depending on the selected one of the compression modes, the maximum block length being greater in the compression mode wherein the digital output signal has a lower bit rate;
   compressor means (13, 14, 15) for deriving the compressed digital signal from the blocks of the digital input signal.

4. The apparatus of anyone of claims 1 to 3, wherein the compressor means includes:

   frequency dividing means (122, 123) for deriving spectral coefficients from the bandwidth-limited signal; and
   quantizing means (126, 127, 128) for quantizing the spectral coefficients grouped by frequency into bands, the bands having a wider bandwidth towards higher frequencies.

5. The apparatus of claim 4, wherein:

the quantizing means includes a bit allocating means (18) for allocating among the bands quantizing bits for quantizing the spectral coefficients in each band, the bit allocating means allocating no quantizing bits to bands having a frequency above the cut-off frequency of the low-pass filter (121); and

the quantizing means includes means (20) for generating sub information for each band below the cut-off frequency of the low-pass filter.

6. The apparatus of claim 4 wherein the frequency dividing means includes an orthogonal transform circuit (13, 14, 15).

7. The apparatus of claim 4, wherein:

the frequency dividing means includes filter means and down sampling means (125) for downsampling the frequency range signal in the frequency range wherein the cut-off frequency of the low-pass filter lies, the downsampling means (125) generating a downsampled frequency range signal; and

the block dividing means and the frequency dividing means operate on the downsampled frequency range signal.

8. The apparatus of claim 7, wherein the filter means (121) divides the bandwidth-limited signal in frequency into frequency ranges including a lowest frequency range adjacent a next-lowest frequency range, the lowest frequency range and the next-lowest frequency range having an equal bandwidth.

9. The apparatus of claim 7, wherein the filter means (11) divides the bandwidth-limited signal in frequency into frequency ranges additionally including a highest frequency range, the highest frequency range having a bandwidth greater than the lowest frequency range.

10. The apparatus of claim 2 or 3, wherein the block length whereinto the block dividing means divides each frequency range signal has a minimum block length equal to a fraction of the maximum block length, the minimum block length whereinto the block dividing means divides the frequency range signal in at least the highest frequency range being the same irrespective of the compression mode.

11. Method for deriving a compressed digital signal from a digital input signal by compressing the digital input signal in a selected one of at least two compression modes, the compressed digital signal having a different bit rate in each of the compression modes, the method comprising the steps of:

receiving (120) the digital input signal at a fixed sampling frequency, the sampling frequency being invariable between the compression modes;

subjecting the digital input signal to low-pass filtering (121) with a cut-off frequency set according to the selected one of the compression modes to provide a bandwidth-limited signal; and

deriving (13, 14, 15) the compressed digital signal from the bandwidth-limited signal.

12. The method of claim 11, wherein:

the method additionally comprises the step of dividing the bandwidth-limited signal in time into blocks, each block having a block length, the block lengths of the blocks having a maximum block length depending on the selected one of the compression modes; and

in the deriving step, the compressed digital signal is derived from the blocks of the bandwidth-limited signal.

13. Method for deriving a compressed digital signal from a digital input signal by compressing the digital input signal using a selected one of at least two compression modes, the compressed digital signal having a different bit rate in each of the compression modes, the method comprising the steps of:

receiving (120) the digital input signal at a fixed sampling rate, the sampling rate being invariable between the compression modes;

dividing the digital input signal in time into blocks, each block having a block length, the block lengths of the blocks having a maximum block length depending on the selected one of the compression modes, the maximum block length being greater in the compression mode wherein the digital output signal has a lower bit rate; and

deriving (13, 14, 15) the compressed digital signal from the blocks of the digital input signal.

**14.** The method of claim 11 or 13, wherein the step of deriving the compressed digital signal includes the steps of:

> deriving (11, 12) spectral coefficients from the bandwidth-limited signal; and quantizing the spectral coefficients grouped by frequency into bands, the bands having a wider bandwidth towards higher frequencies.

**15.** The method of claim 14, wherein:

> the method additionally comprises the step of providing quantizing bits;
> the step of quantizing the spectral coefficients includes the step of allocating (18) the quantizing bits among the bands for quantizing the spectral coefficients in each band, but allocating no quantizing bits to bands having a frequency above the cut-off frequency set according to the selected one of the compression modes; and
> the step of quantizing includes generating (20) sub information for each band having a frequency below the cut-off frequency set according to the selected one of the compression modes.

**16.** The method of claim 14, wherein the step of deriving spectral coefficients from the bandwidth-limited signal includes the step of orthogonally transforming the bandwidth-limited signal.

**17.** The method of claim 14, wherein:

> the method additionally comprises the steps of:
> dividing the band-limited signal in frequency into a frequency range signal in each of plural frequency ranges, and
> dividing each frequency range signal in time into blocks; and the step of deriving spectral coefficients from the bandwidth-limited signal includes the step of orthogonally transforming the blocks of each frequency range signal to provide the spectral coefficients.

**18.** The method of claim 17, wherein:

> the step of dividing the band-limited signal in frequency includes the step of downsampling the frequency range signal n the frequency range wherein the cut-off frequency of the selected one of the compression modes lies to generate a down sampled frequency range signal; and
> the steps of dividing each frequency range signal in time into blocks, and of deriving spectral coefficients from the bandwidth-limited signal operate on the downsampled frequency range signal.

**19.** The method of claim 17, wherein, in the step of dividing the band-limited signal in frequency, the bandwidth-limited signal is divided in frequency into frequency ranges including a lowest frequency range adjacent a next-lowest frequency range, the lowest frequency range, and the next-lowest frequency range having an equal bandwidth.

**20.** The method of claim 19, wherein, in the step of dividing the band-limited signal in frequency, the bandwidth-limited signal is divided in frequency into frequency ranges additionally including a highest frequency range, the highest frequency range having a bandwidth greater than the lowest frequency range.

**21.** The method of claim 13, wherein, in the step of dividing each frequency range signal in time, each frequency range signal is divided into blocks additionally having a minimum block length equal to a fraction of the maximum block length, the minimum block length of the blocks in at least the highest frequency range being the same irrespective of the compression mode.

**22.** A method for recording a compressed digital signal derived by a method according to anyone of claims 11 to 21, furthermore comprising the step of recording the compressed signal on a recording medium (1).

**23.** The method of claim 22, wherein, in the step of providing a recording medium, an optical disc is provided as the recording medium.

**24.** The method of claim 22, wherein, in the step of providing a recording medium, a semiconductor memory is provided as the recording medium.

**Patentansprüche**

1. Gerät zur Gewinnung eines komprimierten digitalen Signals aus einem digitalen Eingangssignal durch Komprimieren des digitalen Eingangssignals in wenigstens einem aus zwei Kompressionsmoden gewählten Modus, wobei das komprimierte digitale Signal in jedem der Kompressionsmoden eine andere Bitrate aufweist, bestehend aus

   einer Empfangseinrichtung (120) zum Empfang des digitalen Eingangssignals mit einer festen Abtastfrequenz, wobei die Abtastfrequenz zwischen den Kompressionsmoden invariabel ist,
   einem Tiefpaßfilter (121) mit einer Grenzfrequenz, die entsprechend dem gewählten Kompressionsmodus eingestellt ist, wobei das Tiefpaßfilter das digitale Eingangssignal empfängt und ein bandbreitenbegrenztes Signal abgibt, und
   einer Kompressoreinrichtung (13, 14, 15) zur Gewinnung des komprimierten digitalen Signals aus dem bandbreitenbegrenzten Signal.

2. Gerät nach Anspruch 1, wobei

   das Gerät zusätzlich eine Blockteilereinrichtung zum zeitlichen Teilen des bandbreitenbegrenzten Signals in Blöcke aufweist, wobei jeder Block eine Blocklänge aufweist und die Blocklängen der Blöcke eine vom gewählten Kompressionsmodus abhängige maximale Blocklänge aufweisen, und
   die Kompressoreinrichtung das komprimierte digitale Signal aus den Blöcken des bandbreitenbegrenzten Signals gewinnt.

3. Gerät zur Gewinnung eines komprimierten digitalen Signals aus einem digitalen Eingangssignal durch Komprimieren des digitalen Eingangssignals in wenigstens einem aus zwei Kompressionsmoden gewählten Modus, wobei das komprimierte digitale Signal in jedem der Kompressionsmoden eine andere Bitrate aufweist, bestehend aus

   einer Einrichtung (120) zum Empfang des digitalen Eingangssignals mit einer festen Abtastrate, wobei die Abtastrate zwischen den Kompressionsmoden invariabel ist,
   einer Blockteilereinrichtung zum zeitlichen Teilen des digitalen Eingangssignals in Blöcke, wobei die Blocklängen der Blöcke eine vom gewählten Kompressionsmodus abhängige maximale Blocklänge aufweisen und die maximale Blocklänge in dem Kompressionsmodus größer ist, in welchem das digitale Ausgangssignal eine niedrigere Bitrate aufweist, und
   einer Kompressoreinrichtung (13, 14, 15) zur Gewinnung des komprimierten digitalen Signals aus den Blöcken des digitalen Eingangssignals.

4. Gerät nach einem der Ansprüche 1 bis 3, wobei die Kompressoreinrichtung

   eine Frequenzteilereinrichtung (122, 123) zur Gewinnung spektraler Koeffizienten aus dem bandbreitenbegrenzten Signal und
   eine Quantisierungseinrichtung (126, 127, 128) zur Quantisierung der frequenzmäßig in Bändern gruppierten spektralen Koeffizienten aufweist, wobei die Bänder in Richtung zu höheren Frequenzen eine größere Bandbreite aufweisen.

5. Gerät nach Anspruch 4, wobei

   die Quantisierungseinrichtung eine Bit-Zuordnungseinrichtung (18) zur Zuordnung von Quantisierungsbits zu den Bändern zur Quantisierung der spektralen Koeffizienten in jedem Band aufweist, wobei die Bit-Zuordnungseinrichtung Bändern, die eine Frequenz oberhalb der Grenzfrequenz des Tiefpaßfilters (121) aufweisen, keine Quantisierungsbits zuordnet, und
   die Quantisierungseinrichtung eine Einrichtung (20) zur Erzeugung einer Subinformation für jedes Band unterhalb der Grenzfrequenz des Tiefpaßfilters aufweist.

6. Gerät nach Anspruch 4, wobei die Frequenzteilereinrichtung eine Orthogonaltransformationsschaltung (13, 14, 15) aufweist.

7. Gerät nach Anspruch 4, wobei

   die Frequenzteilereinrichtung eine Filtereinrichtung und eine Abwärtsabtasteinrichtung (125) zum Abwärtsabtasten des Frequenzbereichssignals im Frequenzbereich aufweist, in welchem die Grenzfrequenz des Tiefpaßfilters liegt, wobei die Abwärtsabtasteinrichtung (125) ein abwärts abgetastetes Frequenzbereichssignal erzeugt, und

die Blockteilereinrichtung und die Frequenzteilereinrichtung mit dem abwärts abgetasteten Frequenzbereichssignal arbeiten.

8. Gerät nach Anspruch 7, wobei die Filtereinrichtung (121) das bandbreitenbegrenzte Signal frequenzmäßig in Frequenzbereiche teilt, die einen niedrigsten Frequenzbereich neben einem nächstniedrigen Frequenzbereich aufweisen, wobei der niedrigste Frequenzbereich und der nächstniedrige Frequenzbereich gleiche Bandbreite aufweisen.

9. Gerät nach Anspruch 7, wobei die Filtereinrichtung (11) das bandbreitenbegrenzte Signal frequenzmäßig in Frequenzbereiche teilt, die zusätzlich einen höchsten Frequenzbereich aufweisen, wobei der höchste Frequenzbereich eine Bandbreite aufweist, die im Vergleich zum niedrigsten Frequenzbereich größer ist.

10. Gerät nach Anspruch 2 oder 3, wobei die Blocklänge in welche die Blockteilereinrichtung jedes Frequenzbereichssignal teilt, eine minimale Blocklänge aufweist, die gleich einem Bruchteil der maximalen Blocklänge ist, wobei die minimale Blocklänge, in welche die Blockteilereinrichtung das Frequenzbereichssignal teilt, ungeachtet des Kompressionsmodus in wenigstens dem höchsten Frequenzbereich gleich ist.

11. Verfahren zum Gewinnen eines komprimierten digitalen Signals aus einem digitalen Eingangssignal durch Komprimieren des digitalen Eingangssignals in wenigstens einem aus zwei Kompressionsmoden gewählten Modus, wobei das komprimierte digitale Signal in jedem Kompressionsmodus eine andere Bitrate aufweist, bestehend aus den Schritten:

Empfangen (120) des digitalen Eingangssignals mit einer festen Abtastfrequenz, wobei die Abtastfrequenz zwischen den Kompressionsmoden invariabel ist,
Unterziehen des digitalen Eingangssignals einer Tiefpaßfilterung (121) mit einer Grenzfrequenz, die zur Gewinnung eines bandbreitenbegrenzten Signals entsprechend dem ausgewählten Kompressionsmodus eingestellt ist und
Gewinnen (13, 14, 15) des komprimierten digitalen Signals aus dem bandbreitenbegrenzten Signal.

12. Verfahren nach Anspruch 11, wobei

das Verfahren zusätzlich den Schritt eines Teilens des bandbreitenbegrenzten Signals in Blöcke aufweist, wobei jeder Block eine Blocklänge aufweist und die Blocklängen der Blöcke eine vom gewählten Kompressionsmodus abhängige maximale Blocklänge aufweisen, und
im Gewinnungsschritt das komprimierte digitale Signal aus den Blöcken des bandbreitenbegrenzten Signals gewonnen wird.

13. Verfahren zum Gewinnen eines komprimierten digitalen Signals aus einem digitalen Eingangssignal durch Komprimieren des digitalen Eingangssignals unter Verwendung eines aus wenigstens zwei Kompressionsmoden ausgewählten Modus, wobei das komprimierte digitale Signal in jedem Kompressionsmodus eine andere Bitrate aufweist, bestehend aus den Schritten:

Empfangen (120) des digitalen Eingangssignals mit einer festen Abtastrate, wobei die Abtastrate zwischen den Kompressionsmoden invariabel ist,
zeitliches Teilen des digitalen Eingangssignals in Blöcke, wobei jeder Block eine Blocklänge aufweist, die Blocklängen der Blöcke eine vom ausgewählten Kompressionsmodus abhängige maximale Blocklänge aufweisen und die maximale Blocklänge in dem Kompressionsmodus größer ist, in welchem das digitale Ausgangssignal eine niedrigere Bitrate aufweist, und
Gewinnen (13, 14, 15) des komprimierten digitalen Signals aus den Blöcken des digitalen Eingangssignals.

14. Verfahren nach Anspruch 11 oder 13, wobei der Schritt des Gewinnens des komprimierten digitalen Signals die Schritte aufweist:

Gewinnen (11, 12) spektraler Koeffizienten aus dem bandbreitenbegrenzten Signal und
Quantisieren der frequenzmäßig in Bändern gruppierten spektralen Koeffizienten, wobei die Bänder in Richtung zu höheren Frequenzen eine größere Bandbreite aufweisen.

**15.** Verfahren nach Anspruch 14, wobei

das Verfahren zusätzlich den Schritt eines Erzeugens von Quantisierungsbits aufweist, wobei der Schritt des Quantisierens der spektralen Koeffizienten den Schritt eines Zuordnens (18) von Quantisierungsbits zu den Bändern zum Quantisieren der spektralen Koeffizienten in jedem Band aufweist, jedoch eines Nichtzuordnens von Quantisierungsbits zu Bändern, die eine Frequenz oberhalb der entsprechend dem ausgewählten Kompressionsmodus eingestellten Grenzfrequenz aufweisen, und der Schritt des Quantisierens ein Erzeugen (20) einer Subinformation für jedes Band mit einer Frequenz unterhalb der entsprechend dem ausgewählten Kompressionsmodus eingestellten Grenzfrequenz aufweist.

**16.** Verfahren nach Anspruch 14, wobei der Schritt des Gewinnens spektraler Koeffizienten aus dem bandbreitenbegrenzten Signal den Schritt eines orthogonalen Transformierens des bandbreitenbegrenzten Signals aufweist.

**17.** Verfahren nach Anspruch 14, wobei
das Verfahren zusätzlich die Schritte aufweist:

frequenzmäßiges Teilen des bandbreitenbegrenzten Signals in ein Frequenzbereichssignal in jedem von mehreren Frequenzbereichen und zeitliches Teilen jedes Frequenzbereichssignals in Blöcke, wobei der Schritt des Gewinnens spektraler Koeffizienten aus dem bandbreitenbegrenzten Signal den Schritt eines orthogonalen Transformierens der Blöcke jedes Frequenzbereichssignals zum Erzeugen der spektralen Koeffizienten aufweist.

**18.** Verfahren nach Anspruch 17, wobei

der Schritt des frequenzmäßigen Teilens des bandbreitenbegrenzten Signals ein Abwärtsabtasten des Frequenzbereichsignals in dem Frequenzbereich aufweist, in welchem die Grenzfrequenz des ausgewählten Kompressionsmodus liegt, um ein abwärts abgetastetes Frequenzbereichssignal zu erzeugen, und die Schritte des zeitlichen Teilens jedes Frequenzbereichssignals in Blöcke und des Gewinnens spektraler Koeffizienten aus dem bandbreitenbegrenzten Signal mit dem abwärts abgetasteten Frequenzbereichsignal arbeiten.

**19.** Verfahren nach Anspruch 17, wobei beim Schritt des frequenzmäßigen Teilens des bandbreitenbegrenzten Signals das bandbreitenbegrenzte Signal frequenzmäßig in Frequenzbereiche geteilt wird, die einen niedrigsten Frequenzbereich neben einem nächstniedrigen Frequenzbereich aufweisen, wobei der niedrigste Frequenzbereich und der nächstniedrige Frequenzbereich gleiche Bandbreite aufweisen.

**20.** Verfahren nach Anspruch 19, wobei beim Schritt des frequenzmäßigen Teilens des bandbreitenbegrenzten Signals das bandbreitenbegrenzte Signal frequenzmäßig in Frequenzbereiche geteilt wird, die zusätzlich einen höchsten Frequenzbereich aufweisen, wobei der höchste Frequenzbereich eine Bandbreite aufweist, die im Vergleich zum niedrigsten Frequenzbereich größer ist.

**21.** Verfahren nach Anspruch 13, wobei beim Schritt des zeitlichen Teilens jedes Frequenzbereichsignals jedes dieser Signale in Blöcke geteilt wird, die zusätzlich eine minimale Blocklänge aufweisen, die gleich einem Bruchteil der maximalen Blocklänge ist, wobei die minimale Blocklänge der Blöcke ungeachtet des Kompressionsmodus wenigstens im höchsten Frequenzbereich gleich ist.

**22.** Verfahren zur Aufzeichnung eines durch ein Verfahren nach einem der Ansprüche 11 bis 21 gewonnenen komprimierten digitalen Signals, mit dem Schritt einesAufzeichnens des komprimierten Signals auf einem Aufzeichnungsmedium (1).

**23.** Verfahren nach Anspruch 22, wobei beim Schritt des Bereitstellens eines Aufzeichnungsmediums eine optische Platte als Aufzeichnungsmedium vorhanden ist.

**24.** Verfahren nach Anspruch 22, wobei beim Schritt des Bereitstellens eines Aufzeichnungsmediums ein Halbleiterspeicher als Aufzeichnungsmedium vorhanden ist.

**Revendications**

1. Appareil pour dériver un signal numérique comprimé à partir d'un signal d'entrée numérique en comprimant le signal d'entrée numérique selon l'un sélectionné d'au moins deux modes de compression, le signal numérique comprimé présentant un débit binaire différent dans chacun des modes de compression, l'appareil comprenant :

   un moyen de réception (120) pour recevoir le signal d'entrée numérique à une fréquence d'échantillonnage fixe, la fréquence d'échantillonnage étant invariable entre les modes de compression ;
   un filtre passe-bas (121) présentant une fréquence de coupure établie conformément à celui sélectionné des modes de compression, le filtre passe-bas recevant le signal d'entrée numérique et produisant un signal à largeur de bande limitée ; et
   un moyen de compresseur (13, 14, 15) pour dériver le signal numérique comprimé à partir du signal à largeur de bande limitée.

2. Appareil selon la revendication 1, dans lequel :

   l'appareil comprend en outre un moyen de division en blocs pour diviser le signal à largeur de bande limitée temporellement selon des blocs, chaque bloc présentant une longueur de bloc, les longueurs de bloc des blocs présentant une longueur de bloc maximum dépendant de celui sélectionné des modes de compression ; et
   le moyen de compresseur dérive le signal numérique comprimé à partir des blocs du signal à largeur de bande limitée.

3. Appareil pour dériver un signal numérique comprimé à partir d'un signal d'entrée numérique en comprimant le signal d'entrée numérique selon l'un sélectionné d'au moins deux modes de compression, le signal numérique comprimé présentant un débit binaire différent dans chacun des modes de compression, l'appareil comprenant :

   un moyen pour recevoir (120) le signal d'entrée numérique à une fréquence d'échantillonnage fixe, la fréquence d'échantillonnage étant invariable entre les modes de compression ;
   un moyen de division en blocs pour diviser le signal d'entrée numérique temporellement selon des blocs, chaque bloc présentant une longueur de bloc, les longueurs de bloc des blocs présentant une longueur de bloc maximum dépendant de celui sélectionné des modes de compression, la longueur de bloc maximum étant supérieure dans le mode de compression dans lequel le signal de sortie numérique présente un débit binaire plus faible ; et
   un moyen de compresseur (13, 14, 15) pour dériver le signal numérique comprimé à partir des blocs du signal d'entrée numérique.

4. Appareil selon l'une quelconque des revendications 1 à 3, dans lequel le moyen de compresseur inclut :

   un moyen de division de fréquence (122, 123) pour dériver des coefficients spectraux à partir du signal à largeur de bande limitée ; et
   un moyen de quantification (126, 127, 128) pour quantifier les coefficients spectraux groupés par fréquence selon des bandes, les bandes présentant une largeur de bande plus large en direction de fréquences plus élevées.

5. Appareil selon la revendication 4, dans lequel :

   le moyen de quantification inclut un moyen d'allocation de bits (18) pour allouer entre les bandes les bits de quantification pour quantifier les coefficients spectraux dans chaque bande, le moyen d'allocation de bits n'allouant pas de bits de quantification à des bandes présentant une fréquence supérieure à la fréquence de coupure du filtre passe-bas (121) ; et
   le moyen de quantification inclut un moyen (20) pour générer une sous-information pour chaque bande au-dessous de la fréquence de coupure du filtre passe-bas.

6. Appareil selon la revendication 4, dans lequel le moyen de division de fréquence inclut un circuit de transformation orthogonale (13, 14, 15).

7. Appareil selon la revendication 4, dans lequel :

le moyen de division de fréquence inclut un moyen de filtre et un moyen d'échantillonnage par abaissement (125) pour échantillonner par abaissement le signal de plage de fréquences dans la plage de fréquences où la fréquence de coupure du filtre passe-bas est située, le moyen d'échantillonnage par abaissement (125) générant un signal de plage de fréquences échantillonné par abaissement ; et

le moyen de division en blocs et le moyen de division de fréquence fonctionnent sur le signal de plage de fréquences échantillonné par abaissement.

8. Appareil selon la revendication 7, dans lequel le moyen de filtre (121) divise en fréquence le signal à largeur de bande limitée selon des plages de fréquences incluant une plage de fréquences la plus faible adjacente à une plage de fréquences la plus faible suivante, la plage de fréquences la plus faible et la plage de fréquences la plus faible suivante présentant des largeurs de bande égales.

9. Appareil selon la revendication 7, dans lequel le moyen de filtre (11) divise en fréquence le signal à largeur de bande limitée selon des plages de fréquences incluant additionnellement une plage de fréquences la plus élevée, la plage de fréquences la plus élevée présentant une largeur de bande supérieure à celle de la plage de fréquences la plus faible.

10. Appareil selon la revendication 2 ou 3, dans lequel la longueur de bloc selon laquelle le moyen de division en blocs divise chaque signal de plage de fréquences présente une longueur de bloc minimum égale à une fraction de la longueur de bloc maximum, la longueur de bloc minimum selon laquelle le moyen de division en blocs divise le signal de plage de fréquence selon au moins la plage de fréquences la plus élevée étant la même indépendamment du mode de compression.

11. Procédé pour dériver un signal numérique comprimé à partir d'un signal d'entrée numérique en comprimant le signal d'entrée numérique selon l'un sélectionné d'au moins deux modes de compression, le signal numérique comprimé présentant un débit binaire différent dans chacun des modes de compression, le procédé comprenant les étapes de :

réception (120) du signal d'entrée numérique à une fréquence d'échantillonnage fixe, la fréquence d'échantillonnage étant invariable entre les modes de compression ;
soumission du signal d'entrée numérique à un filtrage passe-bas (121) avec une fréquence de coupure établie conformément à celui sélectionné des modes de compression afin de produire un signal à largeur de bande limitée ; et
dérivation (13, 14, 15) du signal numérique comprimé à partir du signal à largeur de bande limitée.

12. Procédé selon la revendication 11, dans lequel :

le procédé comprend additionnellement l'étape de division selon des blocs du signal à largeur de bande limitée temporellement , chaque bloc présentant une longueur de bloc, les longueurs de bloc des blocs présentant une longueur de bloc maximum dépendant de celui sélectionné des modes de compression ; et
lors de l'étape de dérivation, le signal numérique comprimé est dérivé à partir des blocs du signal à largeur de bande limitée.

13. Procédé pour dériver un signal numérique comprimé à partir d'un signal d'entrée numérique en comprimant le signal d'entrée numérique en utilisant l'un sélectionné d'au moins deux modes de compression, le signal numérique comprimé présentant un débit binaire différent dans chacun des modes de compression, le procédé comprenant les étapes de :

réception (120) du signal d'entrée numérique à une fréquence d'échantillonnage fixe, la fréquence d'échantillonnage étant invariable entre les modes de compression ;
division selon des blocs du signal d'entrée numérique temporellement, chaque bloc présentant une longueur de bloc, les longueurs de bloc des blocs présentant une longueur de bloc maximum dépendant de celui sélectionné des modes de compression, la longueur de bloc maximum étant supérieure dans le mode de compression dans lequel le signal de sortie numérique présente un débit binaire plus faible ; et
dérivation (13, 14, 15) du signal numérique comprimé à partir des blocs du signal d'entrée numérique.

14. Procédé selon la revendication 11 ou 13, dans lequel l'étape de dérivation du signal numérique comprimé inclut les étapes de :

dérivation (11, 12) de coefficients spectraux à partir du signal à largeur de bande limitée et quantification des coefficients spectraux groupés par fréquence selon des bandes, les bandes présentant une largeur de bande plus large en direction de fréquences plus élevées.

**15.** Procédé selon la revendication 14, dans lequel :

le procédé comprend additionnellement l'étape de constitution de bits de quantification, l'étape de quantification des coefficients spectraux inclut l'étape d'allocation (18) des bits de quantification entre les bandes pour quantifier les coefficients spectraux dans chaque bande mais l'allocation d'aucun bit de quantification à des bandes présentant une fréquence supérieure à la fréquence de coupure établie conformément à celui sélectionné des modes de compression ; et

l'étape de quantification inclut la génération (20) d'une sous-information pour chaque bande présentant une fréquence inférieure à la fréquence de coupure établie conformément à celui sélectionné des modes de compression.

**16.** Procédé selon la revendication 14, dans lequel l'étape de dérivation de coefficients spectraux à partir du signal à largeur de bande limitée inclut l'étape de transformation orthogonale du signal à largeur de bande limitée.

**17.** Procédé selon la revendication 14, dans lequel :
le procédé comprend additionnellement les étapes de :

division en fréquence du signal à largeur de bande limitée selon un signal de plage de fréquences dans chacune d'une pluralité de plages de fréquences ; et

division selon des blocs de chaque signal de plage de fréquences temporellement et l'étape de dérivation de coefficients spectraux à partir du signal à largeur de bande limitée inclut l'étape de transformation orthogonale des blocs de chaque signal de plage de fréquences afin de produire les coefficients spectraux.

**18.** Procédé selon la revendication 17, dans lequel :

l'étape de division en fréquence du signal à largeur de bande limitée inclut l'étape d'échantillonnage par abaissement du signal de plage de fréquences dans la plage de fréquences où la fréquence de coupure de celui sélectionné des modes de compression se situe afin de générer un signal de plage de fréquences échantillonné par abaissement ; et

les étapes de division selon des blocs de chaque signal de plage de fréquences temporellement et de dérivation de coefficients spectraux à partir du signal à largeur de bande limitée opèrent sur le signal de plage de fréquences échantillonné par abaissement.

**19.** Procédé selon la revendication 17, dans lequel, lors de l'étape de division en fréquence du signal à largeur de bande limitée, le signal à largeur de bande limitée est divisé en fréquence selon des plages de fréquences incluant une plage de fréquences la plus faible adjacente à une plage de fréquences la plus faible suivante, la plage de fréquences la plus faible et la plage de fréquences la plus faible suivante présentant des largeurs de bande égales.

**20.** Procédé selon la revendication 19, dans lequel, lors de l'étape de division en fréquence du signal à largeur de bande limitée, le signal à largeur de bande limitée est divisé en fréquence selon des plages de fréquences incluant additionnellement une plage de fréquences la plus élevée, la plage de fréquences la plus élevée présentant une largeur de bande supérieure à celle de la plage de fréquences la plus faible.

**21.** Procédé selon la revendication 13, dans lequel, lors de l'étape de division de chaque signal de plage de fréquences temporellement, chaque signal de plage de fréquences est divisé selon des blocs présentant additionnellement une longueur de bloc minimum égale à une fraction de la longueur de bloc maximum, la longueur de bloc minimum des blocs dans au moins la plage de fréquences la plus élevée étant la même indépendamment du mode de compression.

**22.** Procédé d'enregistrement d'un signal numérique comprimé dérivé au moyen d'un procédé selon l'une quelconque des revendications 11 à 21, comprenant en outre l'étape d'enregistrement du signal comprimé sur un support d'information d'enregistrement (1).

**23.** Procédé selon la revendication 22, dans lequel, lors de l'étape de constitution d'un support d'information d'enregistrement, un disque optique est constitué en tant que support d'information d'enregistrement.

24. Procédé selon la revendication 22, dans lequel, lors de l'étape de constitution d'un support d'information d'enregistrement, une mémoire à semiconducteur est constituée en tant que support d'information d'enregistrement.

**FIG.1**

EP 0 601 566 B1

**FIG.2**

**FIG.3**

FIG.4

**A MODE**

22kHz

11kHz

5.5kHz

0ms                    11.6ms

**B MODE**

13kHz

0ms          11.6ms          23.2ms

**C MODE**

5.5kHz

0ms          11.6ms          23.2ms          34.8ms

**D MODE**

3kHz

0ms          11.6ms          23.2ms          34.8ms          46.4ms

# FIG.5

FIG.6

FIG.7

FIG.8

**FIG.9**

EP 0 601 566 B1

FIG.10

EP 0 601 566 B1

**A MODE**

22kHz

11kHz
5.5kHz

0ms          11.6ms    **TOTAL SUB INFORMATION
NUMBER = 20**

**B MODE**

13kHz

0ms                    **TOTAL SUB INFORMATION
NUMBER = 20**

# FIG.1 1

32

**FIG.12**

EP 0 601 566 B1

**FIG.13**